# EUROPEAN PATENT SPECIFICATION

(11) **EP 4 106 164 B1**
(45) Date of publication and mention of the grant of the patent: **21.02.2024**
(21) Application number: 22178834.2
(22) Date of filing: 14.06.2022
(51) Int. Cl.: H02M 1/14, H02M 3/158

(54) **COT PARALLEL CIRCUIT AND POWER SUPPLY DEVICE**
COT-PARALLELSCHALTUNG UND STROMVERSORGUNGSVORRICHTUNG
CIRCUIT COT PARALLÈLE ET DISPOSITIF D'ALIMENTATION ÉLECTRIQUE

(30) Priority: 18.06.2021 CN 202110679948
(43) Date of publication of application: 21.12.2022
(73) Proprietor: Huawei Technologies Co., Ltd., Shenzhen, Guangdong 518129 (CN)
(72) Inventor: QIN, Junliang, Guangdong, 518129 (CN); XIANG, Zhiqiang, Guangdong, 518129 (CN)
(74) Representative: Thun, Clemens

(56) References cited:
- US-A1- 2013 038 312
- US-A1- 2014 097 818
- US-A1- 2020 169 170

## Description

### TECHNICAL FIELD

Embodiments of this application relate to the circuit field, and in particular, to a constant on time (constant on time control, COT) control parallel circuit and a power supply device.

### BACKGROUND

With improvement of integration of an electronic product, an embedded high-performance circuit system requires that an output voltage of a power supply be able to quickly respond to a load jump while a power supply device outputs a high current. COT can quickly respond to the load jump and keep the output voltage stable to meet a load jump requirement. A current output capability of the power supply device can be improved through multi-COT parallel connection.

Currently, a COT multiphase parallel circuit first needs to construct a continuous RAMP signal in a process of outputting a signal. A controller included in the COT multiphase parallel circuit may generate a pulse signal based on a period of each RAMP signal. Switch assemblies that receive the pulse signal output power signals in sequence. As a frequency of an output power signal of a switch assembly is increased, a frequency of a constructed continuous RAMP signal also needs to be increased accordingly. For example, if an operating frequency of a single switch assembly is 8 MHz, a frequency of a continuous RAMP signal is 32 MHz for a 4-phase COT parallel circuit, and a frequency of a continuous RAMP is 48 MHz for a 6-phase COT parallel circuit. When the operating frequency of the switch assembly is increased, the frequency of the continuous RAMP also needs to be increased accordingly.

The continuous RAMP is usually generated by a signal generator. However, a signal generator produced by using a BCD process has an inherent delay, and consequently, has relatively high difficulty in constructing a high-frequency RAMP signal and is unable to generate a higher-frequency continuous RAMP. This limits a frequency of an output power signal of the COT multiphase parallel circuit, that is, limits a frequency of an output power signal of the power supply device.

A constant on time COT control parallel circuit in accordance with the preamble of claim 1 is known from US 2013/038312 A1.

### SUMMARY

The present invention is defined by the independent claim. Further advantageous developments are shown by the dependent claims.

This application provides a COT parallel circuit and a power supply device, to reduce difficulty of implementing a high-frequency COT multiphase parallel connection.

A first aspect of this application provides a constant on time COT control parallel circuit, including a first phase converter, a second phase converter, a multiphase controller, and a filter module. An output terminal of the first phase converter is electrically connected to an input terminal of the multiphase controller and a first input terminal of the filter module. An input terminal of the second phase converter is electrically connected to an output terminal of the multiphase controller, and an output terminal of the second phase converter is electrically connected to a second input terminal of the filter module. The multiphase controller is configured to control, in one period of a RAMP signal received by the COT parallel circuit and based on a first power signal output by the first phase converter, the second phase converter to output a second power signal.

In this application, after receiving the first power signal output by the first phase converter, the COT multiphase parallel circuit included in a power supply device may output a first pulse signal to the second phase converter, where the first pulse signal is used to indicate the second phase converter to output the second power signal. Further, the COT multiphase parallel circuit may output a plurality of power signals in one period of a RAMP signal. A high-frequency power signal can be output without increasing a frequency of the RAMP signal, thereby reducing difficulty of implementing a high-frequency COT multiphase parallel connection.

In accordance with the present invention, the multiphase controller includes a frequency divider, a first phase inverter, a first period control module, a second period control module, and a first OR gate. An input terminal of the frequency divider is electrically connected to the output terminal of the first phase converter, and an output terminal of the frequency divider is electrically connected to an input terminal of the first period control module and an input terminal of the first phase inverter through a first connection point. An output terminal of the first phase inverter is electrically connected to an input terminal of the second period control module. An input terminal of the first OR gate is electrically connected to an output terminal of the first period control module and an output terminal of the second period control module. The first period control module and the second period control module are configured to: collect, by using a time collection circuit including a plurality of capacitors and a plurality of constant current sources, an output period of the first power signal output by the first phase converter, and output a target signal based on the output period. The first OR gate is configured to output a first pulse signal based on the target signal output by the first period control module or the second period control module, where the first pulse signal is used to indicate the second phase converter to output the second power signal.

In this application, the multiphase controller collects the output period of the first power signal by using the first period module and the second period module, plans an output time of the target signal based on the output period of the first power signal, and further outputs the target signal. The first OR gate outputs the first pulse signal based on the target signal output by the first period control module or the second period control module. This possible implementation provides a specific implementation of controlling, by the multiphase controller based on the first power signal, the second phase converter to output the second power signal, thereby improving implementability of the solution.

The first period control module includes a second phase inverter, a constant current source module, a first switch module, a second switch module, a capacitor module, and a first comparator. The capacitor module includes a first capacitor and a second capacitor. A first terminal of the second phase inverter is electrically connected to the output terminal of the frequency divider, and a second terminal of the second phase inverter is electrically connected to a first terminal of the second switch module. A first terminal of the first switch module is electrically connected to the output terminal of the frequency divider, a second terminal of the first switch module is electrically connected to a first terminal of the constant current source module, and a third terminal of the first switch module is electrically connected to a first terminal of the capacitor module. A second terminal of the second switch module is electrically connected to a second terminal of the constant current source module, and a third terminal of the second switch module is grounded. A third terminal of the capacitor module is grounded. A negative input terminal of the first comparator is electrically connected to the first switch module and the first capacitor through a second connection point, and a positive input terminal of the first comparator is electrically connected to the first switch module and the second capacitor through a third connection point. The first switch module is configured to control, based on different signals output by the frequency divider, a time of charging the first capacitor and the second capacitor in the capacitor module by the constant current source module, where the time of charging the first capacitor and the second capacitor in the capacitor module by the constant current source module is the same as the output period of the first power signal. The second switch module is configured to control, based on a signal output by the second phase inverter, the first capacitor to discharge. The first comparator is configured to: when the first capacitor discharges, output the target signal when determining that a voltage value of the first capacitor is less than a voltage value of the second capacitor.

In this possible implementation, the first switch module may control, based on different signals output by the frequency divider, the time of charging the first capacitor and the second capacitor in the capacitor module by the constant current source module. When the frequency divider outputs a high-level signal, the first switch module receives the high-level signal, and controls a switch to be closed, so that the constant current source module may charge the first capacitor and the second capacitor through the closed switch, where the charging time is the same as the period of the first power signal output by the first phase converter. In this way, the first switch module completes collecting the period of the first power signal. When the frequency divider outputs a low-level signal, the first switch module receives the low-level signal, and controls the switch to be open, so that the constant current source module stops charging the first switch module. The second phase inverter receives the low-level signal output by the frequency divider, converts the low-level signal into a high-level signal, and outputs the high-level signal to the second switch module. After receiving the high-level signal, the second switch module controls a switch between the constant current source module and a ground cable to be closed, so that the first capacitor can slowly discharge through the constant current source module. The negative input terminal of the first comparator collects a voltage of the first capacitor, and the positive input terminal of the first comparator collects a voltage of the second capacitor. When the first capacitor slowly discharges until the voltage is less than the voltage of the second capacitor, the first comparator is inverted, and outputs the target signal to the first OR gate. The target signal may enable the first OR gate to output the first pulse signal. This possible implementation provides a specific implementation of the multiphase controller, thereby improving implementability of the solution.

The first period control module further includes a first flip-flop. A first input terminal of the first flip-flop is electrically connected to the first comparator, a second input terminal of the first flip-flop is electrically connected to the frequency divider, and an output terminal of the first flip-flop is electrically connected to the second switch module. The first flip-flop is configured to control, based on electrical signals output by the first comparator and the frequency divider, some switches in the second switch module to be closed. The second switch module is further configured to control, by closing some switches and based on a signal output by the first flip-flop, the first capacitor and the second capacitor to empty charges.

In this possible implementation, after receiving a signal output by the frequency divider, the first flip-flop outputs a low-level signal to the second switch module, and a switch between the first capacitor and the ground cable and a switch between the second capacitor and the ground cable in the second switch module are open. If the first flip-flop receives the target signal output by the first comparator, the first flip-flop controls the switch between the first capacitor and the ground cable and the switch between the second capacitor and the ground cable in the second switch module to be closed. Further, the second switch module controls, based on the signal output by the first flip-flop, the first capacitor and the second capacitor to be connected to the ground cable, to empty charges, so that the first capacitor and the second capacitor can continue to be charged and discharge in a next operating period to operate properly.

The constant current source module includes a first constant current source, a second constant current source, and a third constant current source, the first switch module includes a first switch and a second switch, and the second switch module includes a third switch, a fourth switch, and a fifth switch. First terminals of the first switch and the second switch are electrically connected to the output terminal of the frequency divider, a second terminal of the first switch is electrically connected to a first terminal of the first constant current source, a third terminal of the first switch is electrically connected to a first terminal of the first capacitor, a second terminal of the second switch is electrically connected to a first terminal of the second constant current source, and a third terminal of the second switch is electrically connected to a first terminal of the second capacitor. A first terminal of the third switch is electrically connected to the second phase inverter, a second terminal of the third switch is electrically connected to the third constant current source, a third terminal of the third switch is grounded, a first terminal of the fourth switch is electrically connected to the first terminal of the first capacitor and the third terminal of the first switch through a fourth connection point, a second terminal of the fourth switch is electrically connected to the output terminal of the first flip-flop, a third terminal of the fourth switch is grounded, a first terminal of the fifth switch is electrically connected to the first terminal of the second capacitor and the third terminal of the second switch through a fifth connection point, a second terminal of the fifth switch is electrically connected to the output terminal of the first flip-flop, and a third terminal of the fifth switch is grounded. Second terminals of the first constant current source and the second constant current source are electrically connected to an external power supply.

This possible implementation provides a specific implementation and a specific connection relationship of the constant current source module, the first switch module, the second switch module, and the capacitor module that are included in the multiphase controller, thereby improving implementability of the solution.

In a possible implementation of the first aspect, the COT parallel circuit further includes a signal processing module, where
an input terminal of the signal processing module is electrically connected to an output terminal of the filter module, an output terminal of the signal processing module is electrically connected to an input terminal of the first phase converter, and the signal processing module is configured to output a second pulse signal based on the received RAMP signal and a signal output by the filter module, where the second pulse signal is used to indicate the first phase converter to output the first power signal.

In this possible implementation, the COT parallel circuit further includes the signal processing module. The signal processing module may receive the RAMP signal and the signal output by the filter module, and output the second pulse signal when a value of the RAMP signal is less than a value of the signal output by the filter module, where the second pulse signal may indicate the first phase converter to output the first power signal. This possible implementation provides a specific control method for controlling the first phase converter to output the first power signal, thereby improving implementability of the solution.

In a possible implementation of the first aspect, the signal processing module includes a first operational amplifier and a second comparator. A first reference signal is input to a first input terminal of the first operational amplifier, a second input terminal of the first operational amplifier is electrically connected to the output terminal of the filter module, and an output terminal of the first operational amplifier is electrically connected to a first input terminal of the second comparator. The ramp compensation RAMP signal is input to a second input terminal of the second comparator, and an output terminal of the second comparator is electrically connected to the input terminal of the first phase converter. The first operational amplifier is configured to adjust, based on the first reference signal and the signal output by the filter module, a value of a signal output to the second comparator. The second comparator is configured to output the first pulse signal when determining that a value of the RAMP signal is less than the value of the signal output by the first operational amplifier.

In this possible implementation, the first operational amplifier 601 is configured to adjust, by using a feedback, a frequency of a pulse signal output by the second comparator 602. The first reference signal is used to adjust a magnitude of a signal EAO. If a value of the first reference signal is greater than that of a power signal output by the filter module 104, the first operational amplifier 601 increases a value of the output signal EAO, and a frequency of the pulse signal output by the second comparator 602 is increased. Similarly, if the value of the first reference signal is less than that of the power signal output by the filter module 104, the first operational amplifier 601 reduces the value of the output signal EAO, and the frequency of the pulse signal output by the second comparator 602 is reduced. Further, the frequency of the pulse signal output by the second comparator 602 may be adjusted by adjusting a reference voltage, to further control intensity of an output current of the entire COT parallel circuit.

In this possible implementation, the first phase converter includes a first on timer, a first drive circuit, a sixth switch, and a seventh switch. A first input terminal of the first on timer is electrically connected to the output terminal of the signal processing module, a second input terminal of the first on timer is electrically connected to a second input terminal of the second phase converter, and an output terminal of the first on timer is electrically connected to an input terminal of the first drive circuit. A first output terminal of the first drive circuit is electrically connected to a first terminal of the sixth switch, and a second output terminal of the first drive circuit is electrically connected to a first terminal of the seventh switch. A second terminal of the sixth switch is electrically connected to the external power supply, and a third terminal of the sixth switch is electrically connected to the second input terminal of the first on timer, a second terminal of the seventh switch, and the first input terminal of the filter module. The second terminal of the seventh switch is electrically connected to the first input terminal of the filter module, and a third terminal of the seventh switch is grounded. The first on timer is configured to output a first signal and a second signal based on the second pulse signal output by the signal processing module and a signal output by the sixth switch, where the first signal is used to indicate the first drive circuit to close the sixth switch and open the seventh switch, the external power supply in the first phase converter outputs the first power signal through the sixth switch in a closed state, the second signal is used to indicate the first drive circuit to close the seventh switch and open the sixth switch, and the first phase converter stops outputting the first power signal.

In this possible implementation, the signal processing module outputs a pulse signal to the first on timer based on the power signal output by the filter module and the received RAMP signal. The first on timer outputs a control signal based on the pulse signal and a current output by a VCC through the sixth switch. A high-level signal in the control signal may control the first drive module to close the sixth switch, so that the external power supply VCC connected to the sixth switch inputs a current to the filter module, that is, the first phase converter outputs the first power signal. A low-level signal in the control signal may control the first drive module to open the sixth switch and close the seventh switch. This possible implementation provides a specific structure of the first phase converter, thereby improving implementability of the solution.

In a possible implementation of the first aspect, the second phase converter includes a second on timer, a second drive circuit, an eighth switch, and a ninth switch. A first input terminal of the second on timer is electrically connected to the output terminal of the multiphase controller, a second input terminal of the second on timer is electrically connected to a second input terminal of the first phase converter, and an output terminal of the second on timer is electrically connected to an input terminal of the second drive circuit. A first output terminal of the second drive circuit is electrically connected to a first terminal of the eighth switch, and a second output terminal of the second drive circuit is electrically connected to a first terminal of the ninth switch. A second terminal of the eighth switch is electrically connected to the external power supply, a third terminal of the eighth switch is electrically connected to the second input terminal of the second on timer, a second terminal of the ninth switch, and the second input terminal of the filter module. The second terminal of the ninth switch is electrically connected to the second input terminal of the filter module, and a third terminal of the ninth switch is grounded. The second conduction delay timing circuit is configured to output a third signal and a fourth signal based on the first pulse signal output by the multiphase controller and a signal output by the eighth switch, where the third signal is used to indicate the second drive circuit to close the eighth switch and open the ninth switch, the external power supply in the second phase converter outputs the second power signal through the eighth switch in a closed state, the fourth signal is used to indicate the second drive circuit to close the ninth switch and open the eighth switch, and the second phase converter stops outputting the second power signal.

In this possible implementation, the multiphase controller receives the first power signal and outputs the first pulse signal to the second on timer. The second on timer outputs a control signal based on the pulse signal and a current output by the VCC through the eighth switch. A high-level signal in the control signal may control the second drive module to close the eighth switch, so that the external power supply VCC connected to the eighth switch inputs a current to the filter module, that is, the second phase converter outputs the second power signal. A low-level signal in the control signal may control the second drive module to open the eighth switch and close the ninth switch. This possible implementation provides a specific structure of the second phase converter, thereby improving implementability of the solution.

In a possible implementation of the first aspect, the first on timer includes a third switch module, a fourth capacitor, a third comparator, and a third flip-flop. A first terminal of the third switch module is electrically connected to the first drive circuit, a second terminal of the third switch module is electrically connected to the external power supply, a third terminal of the third switch module is electrically connected to a first terminal of the fourth capacitor, and a fourth terminal of the third switch module is grounded. A second terminal of the fourth capacitor is electrically connected to a positive input terminal of the third comparator, and a third terminal of the fourth capacitor is grounded. An output terminal of the third comparator is electrically connected to a first input terminal of the third flip-flop. A second input terminal of the third flip-flop is electrically connected to the signal processing module, and an output terminal of the third flip-flop is electrically connected to the first drive circuit. The third switch module is configured to control, based on a signal output by the first drive circuit, the external power supply to charge the fourth capacitor. The third comparator is configured to output a fifth signal when determining that a value of a reference signal received by a second input terminal of the third comparator is less than a voltage value of the fourth capacitor. The third flip-flop is configured to output the first signal based on a pulse signal output by the signal processing module, and output the second signal based on the fifth signal.

In a possible implementation of the first aspect, the first on timer further includes a current equalization circuit and a third operational amplifier, the current equalization circuit includes a plurality of RC filters, and there is a common node between some RC filters. A first terminal of the current equalization circuit is electrically connected to the sixth switch and the second phase converter, and an output terminal of the current equalization circuit is electrically connected to the third operational amplifier. The current equalization circuit is configured to: perform averaging on the first power signal and the second power signal that are output by the first phase converter and the second phase converter to obtain an average signal, input a filtered first power signal to a positive input terminal of the third operational amplifier, and input the average signal to a negative input terminal of the third operational amplifier. The third operational amplifier is configured to: after determining that the filtered first power signal is less than the average signal, reduce a value of a reference signal input to a second terminal of the third comparator; or after determining that the first power signal is greater than the average signal, increase the value of the reference signal input to the second terminal of the third comparator.

In this application, the current equalization circuit may perform averaging on the first power signal and the second power signal that are output by the first phase converter and the second phase converter to obtain the average signal. After determining that the first power signal is less than the average signal, the third operational amplifier may reduce the value of the reference signal input to the second terminal of the third comparator, so that a time in which the third comparator is inverted is shorter, and a value of the first power signal is reduced. After determining that the first power signal is greater than the average signal, the third operational amplifier increases the value of the reference signal input to the second terminal of the third comparator, so that a time in which the third comparator is inverted is longer, and the value of the first power signal is increased. The current equalization circuit and the third comparator may adjust a magnitude of a first output power, so that the first output power is stable within an appropriate range.

In a possible implementation of the first aspect, the filter module includes a first inductor, a second inductor, and a third capacitor. A first terminal of the first inductor is electrically connected to the third terminal of the sixth switch and the second terminal of the seventh switch, and a second terminal of the first inductor is electrically connected to a first terminal of the second inductor and a first terminal of the third capacitor. The first terminal of the second inductor is electrically connected to the third terminal of the eighth switch and the second terminal of the ninth switch, and a second terminal of the second inductor is electrically connected to the first terminal of the third capacitor. A second terminal of the third capacitor is grounded. The first inductor, the second inductor, and the third capacitor are jointly configured to filter output ripples of the first power signal and the second power signal.

This possible implementation provides a specific implementation of the filter module, thereby improving implementability of the solution.

A second aspect of embodiments of this application provides a power supply device. The power supply device includes a controller and a COT parallel circuit. The COT parallel circuit outputs a power signal under control of the controller. The COT parallel circuit is the COT parallel circuit described in any one of the first aspect or the possible implementations of the first aspect.

It can be learned from the foregoing technical solutions that embodiments of this application have the following advantages:

In this application, after receiving the first power signal output by the first phase converter, the COT multiphase parallel circuit included in the power supply device may output the first pulse signal to the second phase converter, where the first pulse signal is used to indicate the second phase converter to output the second power signal. Further, the COT multiphase parallel circuit may output a plurality of power signals in one period of a RAMP signal. A high-frequency power signal can be output without increasing a frequency of the RAMP signal, thereby reducing difficulty of implementing a high-frequency COT multiphase parallel connection.

### BRIEF DESCRIPTION OF DRAWINGS

FIG. 1 is a schematic diagram of application of a power supply device according to this application;
FIG. 2 is a schematic diagram of a structure of a COT multiphase parallel circuit according to this application;
FIG. 3 is a schematic diagram of another structure of a COT multiphase parallel circuit according to this application;
FIG. 4 is a schematic diagram of application of a COT multiphase parallel circuit according to this application;
FIG. 5a is a schematic diagram of a structure of a multiphase controller according to this application;
FIG. 5b is a schematic diagram of a structure of a first period control module according tc an example not falling under the scope of the claims.
FIG. 5c is a schematic diagram of another structure of a first period control module according to this application;
FIG. 5d is a schematic diagram of another structure of a multiphase controller according to this application;
FIG. 5e is a schematic diagram of another structure of a multiphase controller according to this application;
FIG. 6 is a schematic diagram of another application of a multiphase controller according to this application;
FIG. 7 is a schematic diagram of another structure of a multiphase controller according to this application;
FIG. 8 is a schematic diagram of another structure of a COT multiphase parallel circuit according to this application;
FIG. 9 is a schematic diagram of another structure of a COT multiphase parallel circuit according to this application;
FIG. 10 is a schematic diagram of a structure of a first on timer according to this application;
FIG. 11 is a schematic diagram of another structure of a first on timer according to this application;
FIG. 12 is a schematic diagram of structures of a first on timer and a second on timer according to this application;
FIG. 13 is a schematic diagram of a structure of a current equalization circuit according to this application; and
FIG. 14 is a schematic diagram of another structure of a COT multiphase parallel circuit according to this application.

### DESCRIPTION OF EMBODIMENTS

The following clearly and completely describes technical solutions in embodiments of the present invention with reference to accompanying drawings in the embodiments of the present invention. It is clearly that the described embodiments are merely some rather than all of the embodiments of the present invention. All other embodiments obtained by a person skilled in the art based on the embodiments of the present invention shall fall within the protection scope of the present invention.

In the specification, claims, and accompanying drawings of the present invention, the terms "first", "second", "third", "fourth", and so on (if any) are intended to distinguish between similar objects but do not necessarily indicate a specific order or sequence. It should be understood that data termed in such a way is interchangeable in proper circumstances, so that the embodiments described herein can be implemented in other orders than the order illustrated or described herein. Moreover, the terms "include", "have" and any other variants mean to cover non-exclusive inclusion. For example, a process, method, system, product, or device that includes a list of steps or units is not necessarily limited to those expressly listed steps or units, but may include other steps or units that are not expressly listed or inherent to the process, method, product, or device.

With improvement of integration of an electronic product, an embedded high-performance circuit system requires that an output voltage of a power supply be able to quickly respond to a load jump while a power supply device outputs a high current. COT can quickly respond to the load jump and keep the output voltage stable to meet a load jump requirement. A current output capability of the power supply device can be improved through multi-COT parallel connection.

Currently, a COT multiphase parallel circuit first needs to construct a continuous RAMP signal in a process of outputting a signal. A controller included in the COT multiphase parallel circuit may generate a pulse signal based on a period of each RAMP signal. Switch assemblies that receive the pulse signal output power signals in sequence. As a frequency of an output power signal of a switch assembly is increased, a frequency of a constructed continuous RAMP signal also needs to be increased accordingly. For example, if an operating frequency of a single switch assembly is 8 MHz, a frequency of a continuous RAMP signal is 32 MHz for a 4-phase COT parallel circuit, and a frequency of a continuous RAMP is 48 MHz for a 6-phase COT parallel circuit. When the operating frequency of the switch assembly is increased, the frequency of the continuous RAMP also needs to be increased accordingly.

The continuous RAMP is usually generated by a signal generator. However, a signal generator produced by using a BCD process has an inherent delay, and consequently, has relatively high difficulty in constructing a high-frequency RAMP signal and is unable to generate a higher-frequency continuous RAMP. This limits a frequency of an output power signal of the COT multiphase parallel circuit, that is, limits a frequency of an output power signal of the power supply device.

To resolve the foregoing problems that occur during operation of the conventional COT multiphase parallel circuit, this application provides a COT multiphase parallel circuit and a power supply device. After receiving a first power signal output by a first phase converter, the COT multiphase parallel circuit included in the power supply device may output a first pulse signal to a second phase converter, where the first pulse signal is used to indicate the second phase converter to output a second power signal. Further, the COT multiphase parallel circuit may output a plurality of power signals in one period of a RAMP signal. A high-frequency power signal can be output without increasing a frequency of the RAMP signal, thereby reducing difficulty of implementing a high-frequency COT multiphase parallel connection.

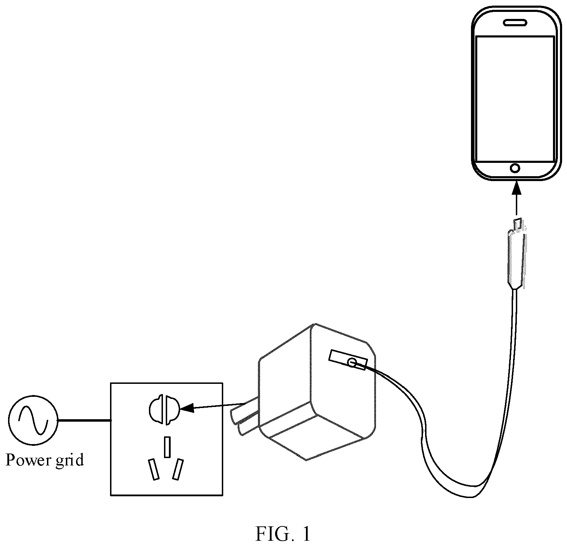

FIG. 1 is a schematic diagram of application of a power supply device according to this application.

As shown in FIG. 1, in this application, a scenario in which a power supply device including a COT multiphase parallel circuit charges a load device may be understood with reference to a mobile phone charging scenario shown in FIG. 1. As shown in FIG. 1, one end of the power supply device is connected to a power grid by using a socket, and the other end of the power supply device is connected to a mobile phone. In this way, a charging loop from the power grid to the mobile phone can be connected, to implement a mobile phone charging process.

The power supply device shown in FIG. 1 is merely a possible form. Actually, there may be a plurality of types of power supply devices. Power supply devices of different types of terminal devices may be different, and power supply devices of a same type of terminal devices may also be different. This is not limited in this application.

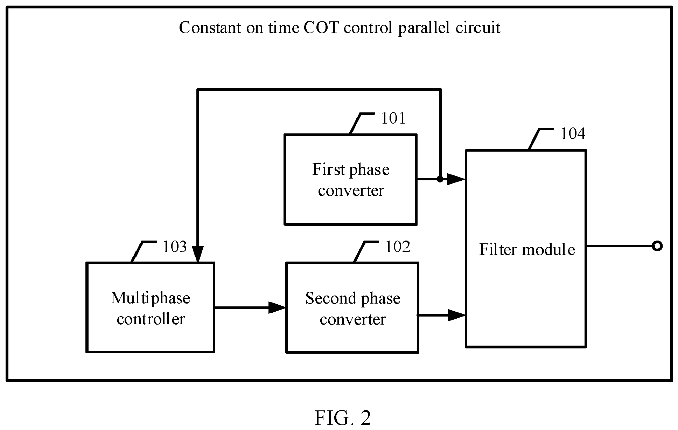

FIG. 2 is a schematic diagram of a structure of a COT multiphase parallel circuit according to this application.

FIG. 2 shows a topology of the COT multiphase parallel circuit provided in this application. The COT multiphase parallel circuit includes a first phase converter 101, a second phase converter 102, a multiphase controller 103, and a filter module 104. An output terminal of the first phase converter 101 is electrically connected to an input terminal of the multiphase controller 103 and a first input terminal of the filter module 104. An input terminal of the second phase converter 102 is electrically connected to an output terminal of the multiphase controller 103, and an output terminal of the second phase converter 102 is electrically connected to a second input terminal of the filter module 104.

In this possible implementation, after receiving a first power signal output by the first phase converter 101, the multiphase controller 103 controls, in one period of a RAMP signal received by the COT parallel circuit and based on a first power signal output by the first phase converter, the second phase converter to output a second power signal. The filter module 104 may filter the first power signal and the second power signal, to reduce output ripples of the first power signal and the second power signal, so that the COT multiphase parallel circuit can output a power signal steadily.

In this application, to improve a current output capability of the COT multiphase parallel circuit, the COT multiphase parallel circuit may further include more phase converters. This possible implementation is described in the following example.

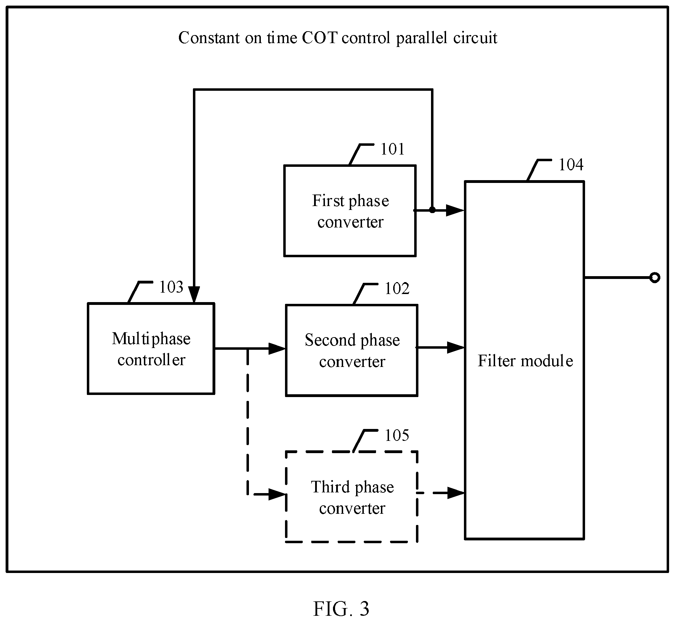

FIG. 3 is a schematic diagram of another structure of a COT multiphase parallel circuit according to this application.

As shown in FIG. 3, in this application, optionally, the COT multiphase parallel circuit may further include a third phase converter 105. An input terminal of the third phase converter 105 is electrically connected to the output terminal of the multiphase controller 103, and an output terminal of the third phase converter 105 is electrically connected to the filter module 104.

In this application, the first phase converter outputs the first power signal to the multiphase controller 103 and the filter module 104. After receiving the first power signal output by the first phase converter 101, the multiphase controller 103 outputs a first pulse signal to the second phase converter 102, where the first pulse signal may trigger the second phase converter 102 to output the second power signal. The multiphase controller 103 outputs a third pulse signal to the third phase converter 105, where the third pulse signal may trigger the third phase converter 105 to output a third power signal. The filter module 104 may filter the first power signal, the second power signal, and the third power signal, to reduce output ripples of the first power signal, the second power signal, and the third power signal, so that the COT multiphase parallel circuit can output a power signal steadily.

In this application, the COT multiphase parallel circuit provided in the embodiment shown in FIG. 3 includes the third phase converter 105, thereby improving the current output capability of the COT multiphase parallel circuit. Optionally, similarly, to improve the current output capability of the COT multiphase parallel circuit, the COT multiphase parallel circuit provided in this application may further include more phase converters, for example, a fourth phase converter, a fifth phase converter, and a sixth phase converter. This is not specifically limited herein.

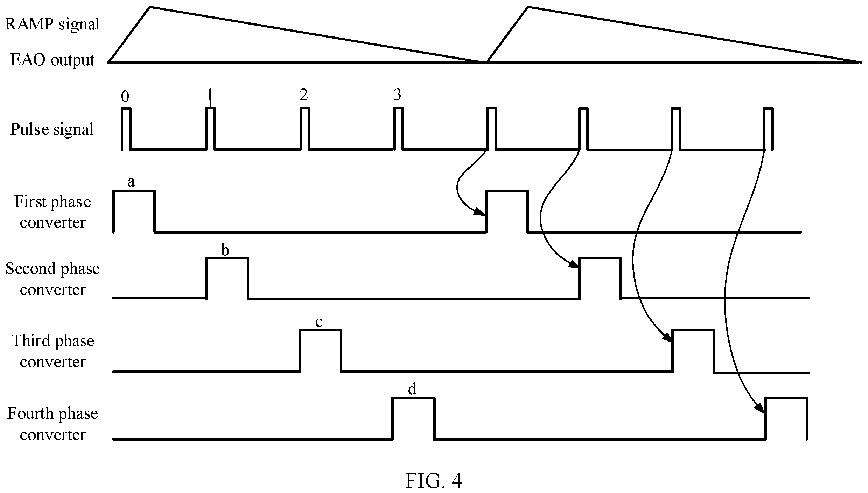

FIG. 4 is a schematic diagram of application of a COT multiphase parallel circuit according to this application.

As shown in FIG. 4, an example in which the COT multiphase parallel circuit includes three phase converters is used to describe occasions of sending a power signal and a pulse signal in the COT multiphase parallel circuit. A signal processing module outputs a pulse signal 0 based on a RAMP signal and a power signal a. A first phase converter outputs the power signal a based on a pulse signal 0. A multiphase controller outputs a pulse signal 1 to a second phase converter based on the power signal a. The second phase converter outputs a power signal b based on the pulse signal 1. The multiphase controller outputs a pulse signal 2 to a third phase converter, and the third phase converter outputs a power signal c. The multiphase controller outputs a pulse signal 3 to a fourth phase converter, and the third phase converter outputs a power signal d. When a next period of the RAMP signal arrives, the foregoing signal output process is repeated.

In this application, the COT multiphase parallel circuit may include more or fewer phase converters. When the COT multiphase parallel circuit includes more or fewer phase converters, occasions of sending a power signal and a pulse signal are similar to those in the embodiment shown in FIG. 4. Details are not described herein again.

In this application, the multiphase controller 103 described in the embodiments shown in FIG. 2 to FIG. 4 has a specific implementation. The following describes in detail a specific structure included in the multiphase controller 103.

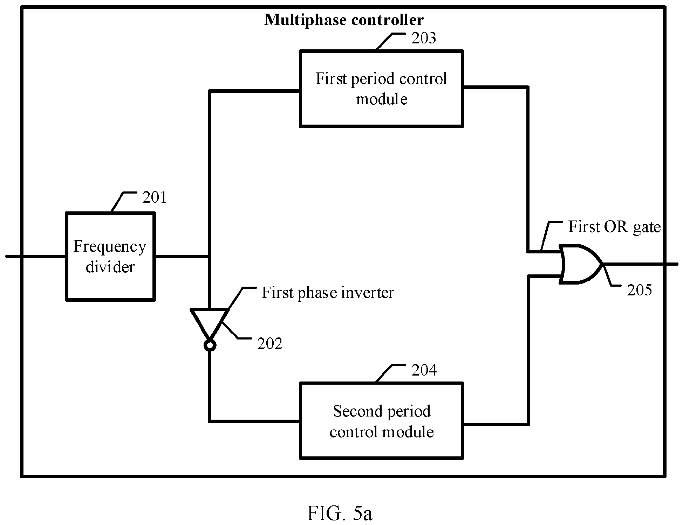

FIG. 5a is a schematic diagram of a structure of a multiphase controller according to this application.

FIG. 5a shows a specific structure of the multiphase controller provided in this application. The multiphase controller includes a frequency divider 201, a first phase inverter 202, a first period control module 203, a second period control module 204, and a first OR gate 205.

An input terminal of the frequency divider 201 is electrically connected to the output terminal of the first phase converter 202, and an output terminal of the frequency divider 201 is electrically connected to an input terminal of the first period control module 204 and an input terminal of the first phase inverter 202 through a first connection point. An output terminal of the first phase inverter 202 is electrically connected to an input terminal of the second period control module 204. An input terminal of the first OR gate 205 is electrically connected to an output terminal of the first period control module 204 and an output terminal of the second period control module 204.

In this application, after receiving different signals output by the frequency divider 201, the first period module 203 and the second period module 204 may collect, by using a time collection circuit including a plurality of capacitors and a plurality of constant current sources, an output period of the first power signal output by the first phase converter, and output a target signal based on the output period. The first OR gate 205 may output the first pulse signal based on the target signal output by the first period control module 203 or the second period control module 204, where the first pulse signal is used to indicate the second phase converter 102 to output the second power signal.

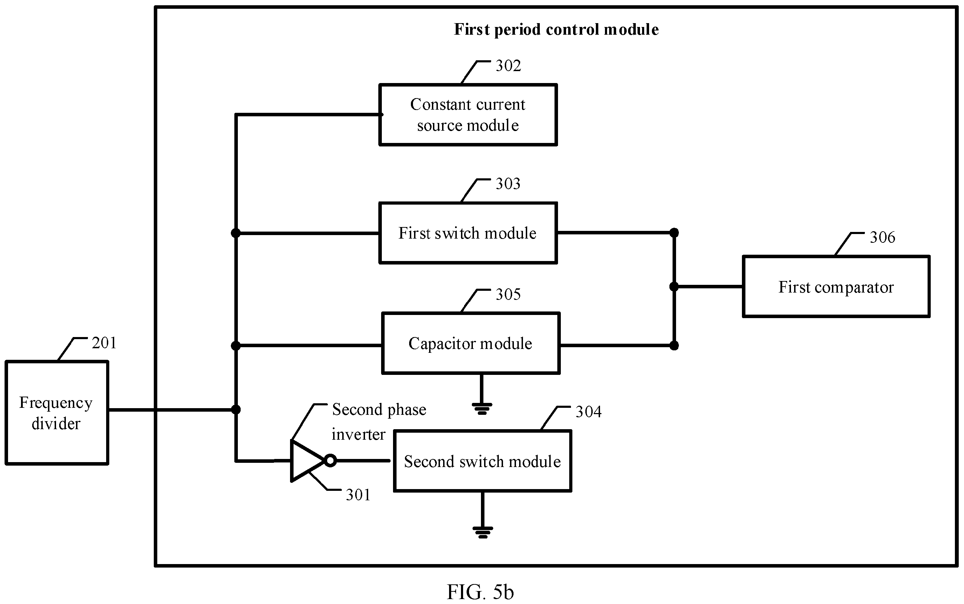

FIG. 5b is a schematic diagram of a structure of a first period control module according tc an example not falling under the scope of the claims.

FIG. 5b shows the first period control module 203. The first period control module 203 includes a second phase inverter 301, a constant current source module 302, a first switch module 303, a second switch module 304, a capacitor module 305, and a first comparator 306. The capacitor module 305 includes a first capacitor and a second capacitor.

A first terminal of the second phase inverter 301 is electrically connected to the output terminal of the frequency divider 201, and a second terminal of the second phase inverter 301 is electrically connected to a first terminal of the second switch module 304. A first terminal of the first switch module 303 is electrically connected to the output terminal of the frequency divider 201, a second terminal of the first switch module 303 is electrically connected to a first terminal of the constant current source module 302, and a third terminal of the first switch module 303 is electrically connected to a first terminal of the capacitor module 305. A second terminal of the second switch module 304 is electrically connected to a second terminal of the constant current source module 302, and a third terminal of the second switch module 304 is grounded. A third terminal of the capacitor module 305 is grounded. A negative input terminal of the first comparator 306 is electrically connected to the first switch module 303 and the first capacitor through a second connection point, and a positive input terminal of the first comparator is electrically connected to the first switch module 303 and the second capacitor through a third connection point.

In this application, the first switch module 303 may control, based on different signals output by the frequency divider, a time of charging the first capacitor and the second capacitor in the capacitor module 305 by the constant current source module 302. When the frequency divider 201 outputs a high-level signal, the first switch module 303 receives the high-level signal, and controls a switch to be closed, so that the constant current source module 302 may charge the first capacitor and the second capacitor through the closed switch, where the charging time is the same as the period of the first power signal output by the first phase converter 101. In this way, the first switch module 303 completes collecting the period of the first power signal. When the frequency divider 201 outputs a low-level signal, the first switch module 303 receives the low-level signal, and controls the switch to be open, so that the constant current source module 302 stops charging the first switch module 303. The second phase inverter 301 receives the low-level signal output by the frequency divider 201, converts the low-level signal into a high-level signal, and outputs the high-level signal to the second switch module 304. After receiving the high-level signal, the second switch module 304 controls a switch between the constant current source module 302 and a ground cable to be closed, so that the first capacitor can slowly discharge through the constant current source module 302. The negative input terminal of the first comparator 306 collects a voltage of the first capacitor, and the positive input terminal of the first comparator 306 collects a voltage of the second capacitor. When the first capacitor slowly discharges until the voltage is less than the voltage of the second capacitor, the first comparator 306 is inverted, and outputs the target signal to the first OR gate 205. The target signal may enable the first OR gate 205 to output the first pulse signal.

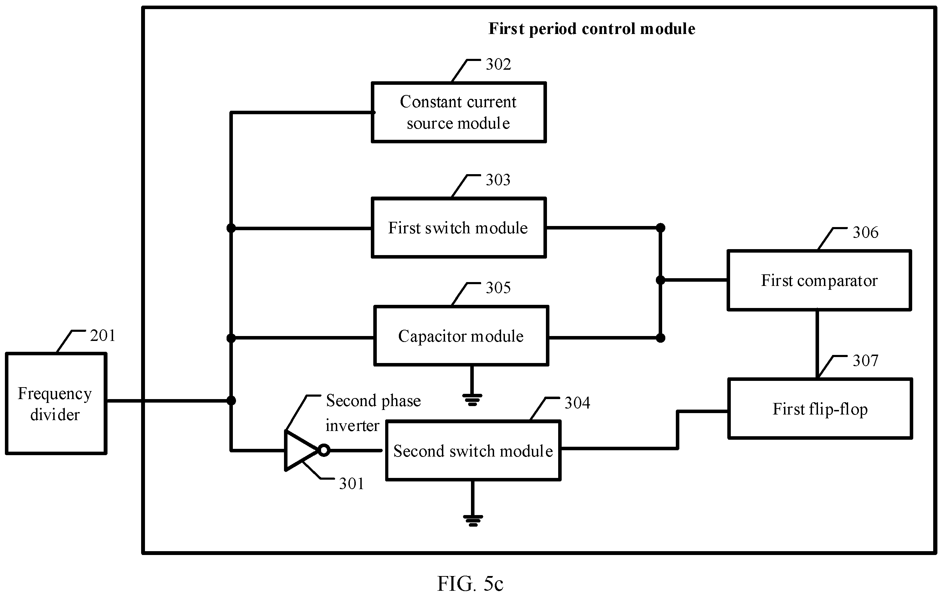

FIG. 5c is a schematic diagram of another structure of a first period control module according to this application.

As shown in FIG. 5c, the first period control module further includes a first flip-flop 307. A first input terminal of the first flip-flop 307 is electrically connected to the first comparator 306, a second input terminal of the first flip-flop 307 is electrically connected to the frequency divider 201, and an output terminal of the first flip-flop 307 is electrically connected to the second switch module 304.

In this application, after receiving a signal output by the frequency divider, the first flip-flop 307 outputs a low-level signal to the second switch module, and a switch between the first capacitor and the ground cable and a switch between the second capacitor and the ground cable in the second switch module are open. If the first flip-flop 307 receives the target signal output by the first comparator 306, the first flip-flop controls the switch between the first capacitor and the ground cable and the switch between the second capacitor and the ground cable in the second switch module to be closed. Further, the second switch module 304 controls, based on the signal output by the first flip-flop 307, the first capacitor and the second capacitor to be connected to the ground cable, to empty charges.

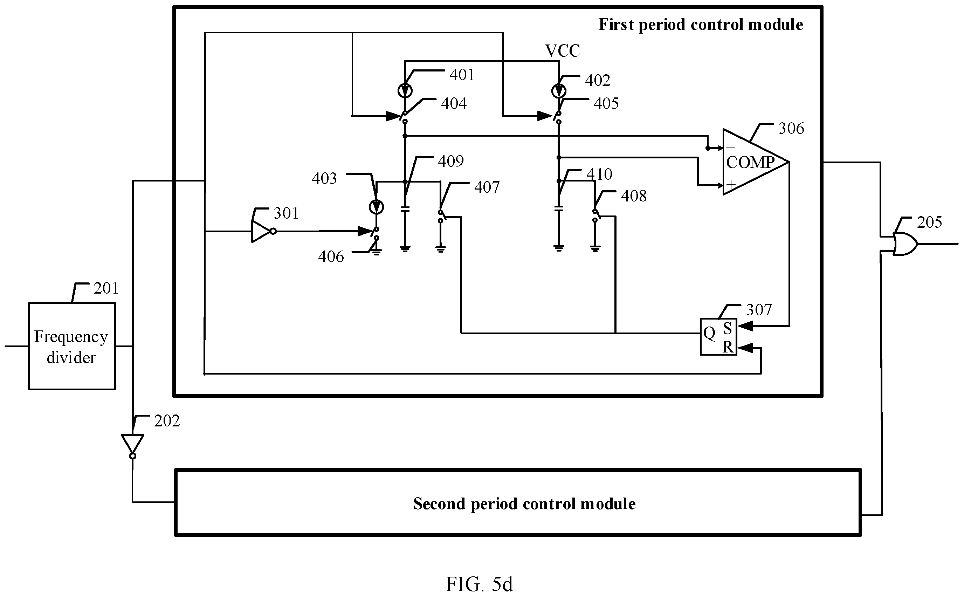

FIG. 5d is a schematic diagram of another structure of a multiphase controller according to this application.

As shown in FIG. 5d, the constant current source module includes a first constant current source 401, a second constant current source 402, and a third constant current source 403, the first switch module includes a first switch 404 and a second switch 405, and the second switch module includes a third switch 406, a fourth switch 407, and a fifth switch 408.

First terminals of the first switch 404 and the second switch 405 are electrically connected to the output terminal of the frequency divider 201. A second terminal of the first switch 404 is electrically connected to a first terminal of the first constant current source 401. A third terminal of the first switch 404 is electrically connected to a first terminal of the first capacitor 409. A second terminal of the second switch 405 is electrically connected to a first terminal of the second constant current source 402. A third terminal of the second switch is electrically connected to a first terminal of the second capacitor.

A first terminal of the third switch 406 is electrically connected to the second phase inverter 202. A second terminal of the third switch 406 is electrically connected to the third constant current source 405. A third terminal of the third switch 406 is grounded. A first terminal of the fourth switch 407 is electrically connected to the first terminal of the first capacitor 409 and the third terminal of the first switch 404 through a fourth connection point. A second terminal of the fourth switch 407 is electrically connected to the output terminal of the first flip-flop 307. A third terminal of the fourth switch 407 is grounded. A first terminal of the fifth switch 408 is electrically connected to the first terminal of the second capacitor 410 and the third terminal of the second switch 405 through a fifth connection point. A second terminal of the fifth switch 408 is electrically connected to the output terminal of the first flip-flop 307. A third terminal of the fifth switch 408 is grounded.

Second terminals of the first constant current source 401 and the second constant current source 402 are electrically connected to an external power supply VCC.

In this application, when the frequency divider 201 outputs a high-level signal, the first switch 404 and the second switch 405 are closed, and the first constant current source 401 and the second constant current source 402 charge the first capacitor 409 and the second capacitor 410 through the first switch 404 in a closed state and the second switch 405 in a closed state. When the frequency divider 201 outputs a low-level signal, the first switch 404 and the second switch 405 are open, and charging of the first capacitor 409 and the second capacitor 410 stops. A charging time is the same as the period of the first power signal output by the first phase converter 101. In this way, the first switch 404 and the second switch 405 complete collecting the period of the first power signal. When the frequency divider 201 outputs a high-level signal, the high-level signal is processed by the second phase inverter 202 and then a low-level signal is output to the third switch 406. The third switch 406, the fourth switch 407, and the fifth switch 408 are all open. When the frequency divider 201 outputs a low-level signal, the low-level signal is processed by the second phase inverter 202 and then a high-level signal is output to the third switch 406. The third switch 406 is closed, and the first capacitor 409 slowly discharges through the third constant current source 403. The negative input terminal of the first comparator 306 collects a voltage of the first capacitor 409, and the positive input terminal of the first comparator 306 collects a voltage of the second capacitor 410. When the first capacitor 409 slowly discharges until the voltage is less than the voltage of the second capacitor 410, the first comparator 306 is inverted, and outputs the target signal to the first OR gate 205. The target signal may enable the first OR gate 205 to output the first pulse signal.

In this application, optionally, the frequency divider 201 may be a D flip-flop, or the frequency divider 201 may be a logic circuit capable of implementing frequency division, or the frequency divider 201 may be another type of frequency divider. This is not specifically limited herein.

In this application, optionally, the first switch to the fifth switch may be triodes, or may be MOS transistors, or may be other types of switches. This is not specifically limited herein.

The multiphase controller provided in this application may include more capacitors, comparators, and OR gates, and further, may output more pulse signals. This is not specifically limited herein.

In this application, an operating principle of the second period control module is similar to that of the first period control module described in the foregoing embodiments. Details are not described herein again.

In this application, to enable the multiphase controller to continuously output pulse signals, the first period control module and the second period control module included in the multiphase controller operate alternately. When the first capacitor and the second capacitor included in the first period control module are in a charging state, the first comparator 306 cannot output a high-level signal. In this case, a capacitor included in the second period control is in a discharging state, and a comparator included in the second period control module may output a high-level signal after being inverted, so that the first OR gate 205 outputs a pulse signal. This ensures that the multiphase controller continuously outputs pulse signals.

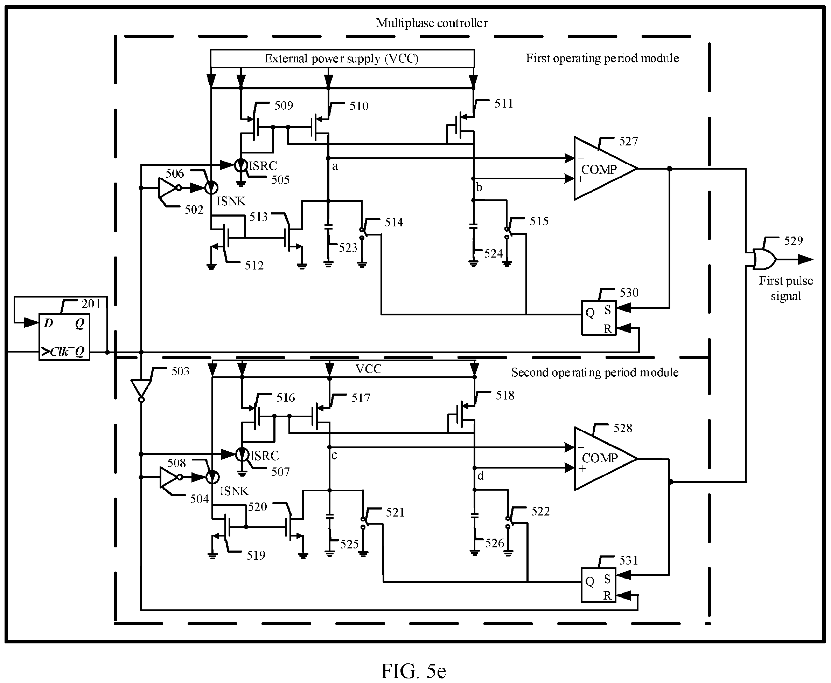

FIG. 5e is a schematic diagram of another structure of a multiphase controller according to this application.

FIG. 5e shows a topology of the multiphase controller provided in this application. Optionally, the multiphase controller includes a frequency divider 501, a phase inverter 502, a phase inverter 503, a phase inverter 504, a constant current source 505, a constant current source 506, a constant current source 507, a constant current source 508, a switch 509, a switch 510, a switch 511, a switch 512, a switch 513, a switch 514, a switch 515, a switch 516, a switch 517, a switch 518, a switch 519, a switch 520, a switch 521, a switch 522, a capacitor 523, a capacitor 524, a capacitor 525, a capacitor 526, a comparator 527, a comparator 528, an OR gate 529, a flip-flop 530, and a flip-flop 531.

An input terminal of the frequency divider 501 is electrically connected to an output terminal of the phase converter 101. An output terminal of the frequency divider 501 is electrically connected to a first terminal of the constant current source 505, an input terminal of the phase inverter 502, an input terminal of the phase inverter 503, and a first input terminal of the flip-flop 530 through a first connection point.

A first terminal of the switch 509, a first terminal of the switch 510, and a first terminal of the switch 511 are electrically connected to the external power supply. A second terminal of the switch 509 is electrically connected to a second terminal of the constant current source 505. A second terminal of the switch 510 is electrically connected to a first terminal of the capacitor 523. A second terminal of the switch 511 is electrically connected to a first terminal of the capacitor 524. A third terminal of the switch 509, a third terminal of the switch 510, and a third terminal of the switch 511 are electrically connected to the second terminal of the constant current source 505. A third terminal of the constant current source 505 is grounded. A second terminal of the capacitor 523 is grounded. A second terminal of the capacitor 524 is grounded.

A first terminal of the constant current source 506 is electrically connected to a second terminal of the phase inverter 502. A second terminal of the constant current source 506 is electrically connected to the external power supply. A third terminal of the constant current source 506 is electrically connected to a first terminal of the switch 512, a second terminal of the switch 512, and a first terminal of the switch 513. A third terminal of the switch 512 is grounded. A second terminal of the switch 513 is electrically connected to the first terminal of the first capacitor 523 and the third terminal of the switch 510. A third terminal of the switch 513 is grounded.

A negative input terminal of the comparator 527 is electrically connected to the first terminal of the capacitor 523 and a third terminal of the switch 519 through a second connection point a. A positive input terminal of the comparator 527 is electrically connected to the first terminal of the capacitor 524 and the third terminal of the switch 511 through a third connection point b. An output terminal of the comparator 527 is electrically connected to a first input terminal of the OR gate 529 and a second input terminal of the flip-flop 530.

A first terminal of the switch 514 is electrically connected to the first terminal of the capacitor 523 and the third terminal of the switch 510. A second terminal of the switch 514 is grounded. A third terminal of the switch 514 is electrically connected to an output terminal of the flip-flop 530. A first terminal of the switch 515 is electrically connected to the first terminal of the capacitor 524 and the third terminal of the switch 511. A second terminal of the switch 515 is grounded. A third terminal of the switch 515 is electrically connected to the output terminal of the first flip-flop 530.

A second terminal of the phase inverter 503 is electrically connected to a first terminal of the constant current source 507, a first terminal of the phase inverter 508, and a first input terminal of the second flip-flop 531.

A first terminal of the switch 516, a first terminal of the switch 517, and a first terminal of the switch 518 are electrically connected to the external power supply. A second terminal of the switch 516 is electrically connected to a second terminal of the constant current source 507. A second terminal of the switch 517 is electrically connected to a first terminal of the capacitor 525. A second terminal of the switch 518 is electrically connected to a first terminal of the capacitor 526. A third terminal of the switch 516, a third terminal of the switch 517, and a third terminal of the switch 518 are electrically connected to the second terminal of the constant current source 507. A third terminal of the constant current source 507 is grounded. A second terminal of the capacitor 525 is grounded. A second terminal of the capacitor 526 is grounded.

A first terminal of the constant current source 508 is electrically connected to a second terminal of the phase inverter 504. A second terminal of the constant current source 508 is electrically connected to the external power supply. A third terminal of the constant current source 508 is electrically connected to a first terminal of the switch 519, a second terminal of the switch 519, and a first terminal of the switch 520. A third terminal of the switch 519 is grounded. A second terminal of the switch 520 is electrically connected to the first terminal of the capacitor 525 and the third terminal of the switch 517. A third terminal of the switch 520 is grounded.

A negative input terminal of the comparator 528 is electrically connected to the first terminal of the capacitor 525 and a third terminal of the switch 517 through a fourth connection point c. A positive input terminal of the comparator 528 is electrically connected to the first terminal of the capacitor 526 and the third terminal of the switch 518 through a fifth connection point d. An output terminal of the comparator 528 is electrically connected to a second input terminal of the OR gate 529 and a second input terminal of the flip-flop 531.

A first terminal of the switch 521 is electrically connected to the first terminal of the capacitor 525 and the third terminal of the switch 517. A second terminal of the switch 521 is grounded. A third terminal of the switch 521 is electrically connected to an output terminal of the flip-flop 531. A first terminal of the switch 522 is electrically connected to the first terminal of the capacitor 526 and the third terminal of the switch 518. A second terminal of the switch 522 is grounded. A third terminal of the switch 522 is electrically connected to the output terminal of the second flip-flop 531.

In this application, after receiving the first power signal sent by the phase converter, the frequency divider 501 outputs a high-level signal, and the first period control module included in the multiphase controller is in an energy storage state. When a high level is input to the constant current source 505, the constant current source 505 controls the switch 509, the switch 510, and the switch 511 to be closed, that is, the external power supply VCC charges the capacitor 523 and the capacitor 524. After the frequency divider 501 outputs a low-level signal, the constant current source 505 controls the switch 509, the switch 510, and the switch 511 to be open, and the external power supply VCC stops charging the capacitor 523 and the capacitor 524. The low-level signal output by the frequency divider 501 is processed by the phase inverter 502 and then a high-level signal is output. The constant current source 506 controls the switch 512 and the switch 513 to be closed, and the capacitor 523 slowly discharges through the switch 523. A negative input terminal of the comparator 527 collects a voltage of the capacitor 523, and a positive input terminal of the comparator collects a voltage of the capacitor 524. When the voltage of the capacitor 523 is lower than the voltage of the capacitor 524 after the discharging, the comparator 527 is inverted and outputs a high-level signal to the OR gate 529, and the OR gate 529 outputs the first pulse signal to the phase converter. Further, the second phase converter may be controlled by the first pulse signal to output the second power signal. The comparator 527 outputs a high-level signal to the flip-flop 530. In this case, the flip-flop 530 outputs an electrical signal to control the switch 514 and the switch 515 to be closed, so that the capacitor 523 and the capacitor 524 can discharge through the switch 514 and the switch 515.

In this application, to enable the multiphase controller to continuously output pulse signals, the first period control module and the second period control module included in the multiphase controller operate alternately. When the first capacitor and the second capacitor included in the first period control module are in a charging state, the comparator 527 cannot output a high-level signal. In this case, a third capacitor and a fourth capacitor that are included in the second period control are in a discharging state, and the comparator 528 may output a high-level signal after being inverted, so that the OR gate 529 outputs a pulse signal. This ensures that the multiphase controller continuously outputs pulse signals.

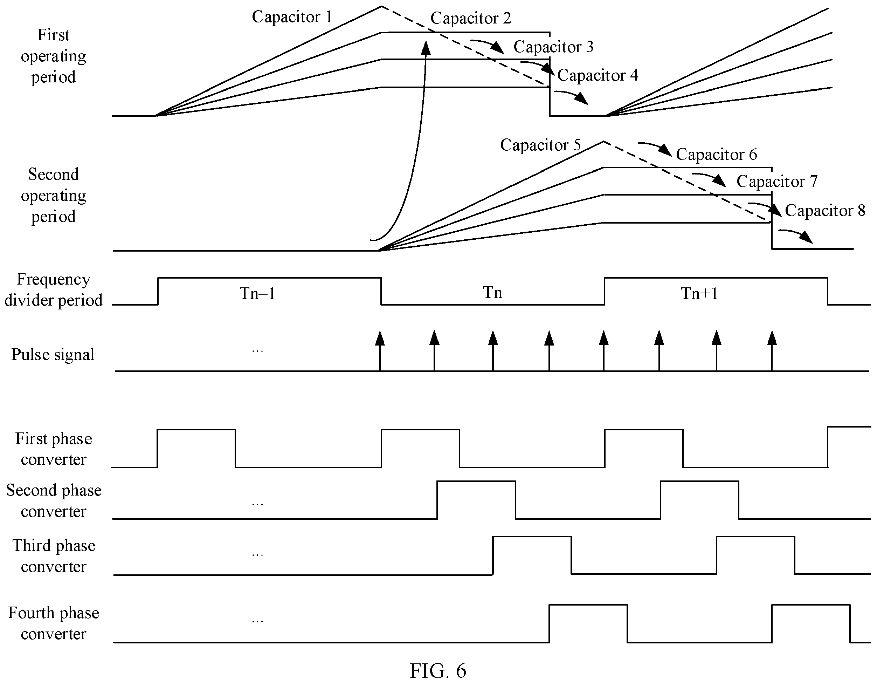

FIG. 6 is a schematic diagram of application of a multiphase controller according to this application.

As shown in FIG. 6, an example in which the multiphase controller includes eight capacitors is used to describe a process of outputting a pulse signal by the multiphase controller. It is assumed that a first period control module of the multiphase controller includes a capacitor 1, a capacitor 2, a capacitor 3, and a capacitor 4, and a second period control module of the multiphase controller includes a capacitor 5, a capacitor 6, a capacitor 7, and a capacitor 8.

As shown in FIG. 6, the first period control is used as an example for description. After a COT parallel circuit outputs a first power signal, a frequency divider outputs a high-level signal after receiving the first power signal. The capacitor 1, the capacitor 2, the capacitor 3, and the capacitor 4 start to be charged. After a first phase converter outputs a first power signal again, the frequency divider outputs a low-level signal after receiving the first power signal. The capacitor 1 starts to discharge, and voltages of the capacitor 2, the capacitor 3, and the capacitor 4 remain unchanged. When a voltage of the capacitor 1 is lower than a voltage of the capacitor 2, a corresponding comparator 1 that collects the voltages of the capacitor 1 and the capacitor 2 is inverted, the comparator 1 outputs a high-level signal (a target signal), and an OR gate 1 connected to the comparator 1 outputs a first pulse signal. Correspondingly, a second phase converter outputs a second power signal. Similarly, when the voltage of the capacitor 1 is lower than each of a voltage of the capacitor 3 and a voltage of the capacitor 4, a corresponding comparator 2 and comparator 3 that collect the voltages of the capacitor 3 and the capacitor 4 are inverted, the comparator 2 and the comparator 3 output high-level signals (target signals), and an OR gate 2 and an OR gate 3 that are connected to the comparator 2 and the comparator 3 output a third pulse signal and a fourth pulse signal. Correspondingly, a third phase converter and a fourth phase converter output a third power signal and a fourth power signal respectively. In addition, after the frequency divider outputs the low-level signal after receiving the first power signal, the capacitor 5 in the second period control module is triggered to discharge, so that the multiphase controller can continuously output pulse signals when the first period control module is charged.

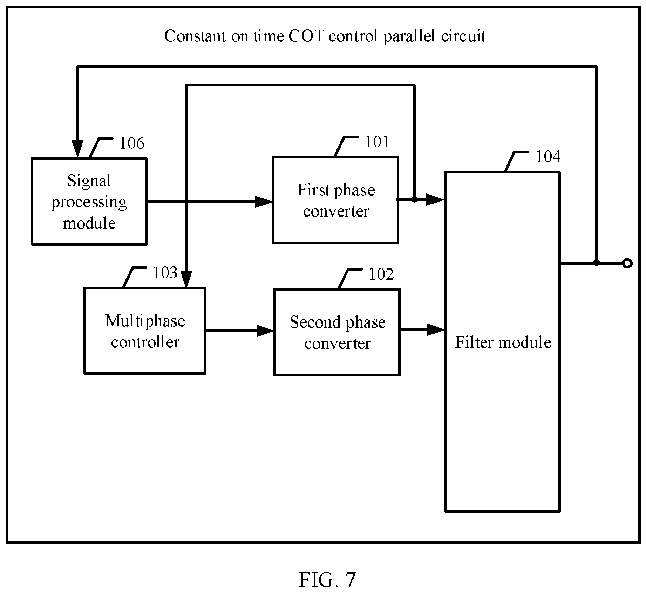

FIG. 7 is a schematic diagram of another structure of a COT parallel circuit according to this application.

As shown in FIG. 7, in this application, the COT parallel circuit further includes a signal processing module 106. An input terminal of the signal processing module 106 is electrically connected to an output terminal of the filter module 104, and an output terminal of the signal processing module 106 is electrically connected to an input terminal of the first phase converter 101.

In this application, the signal processing module 106 may output a second pulse signal based on a received RAMP signal and a signal output by the filter module, where the second pulse signal is used to indicate the first phase converter to output the first power signal.

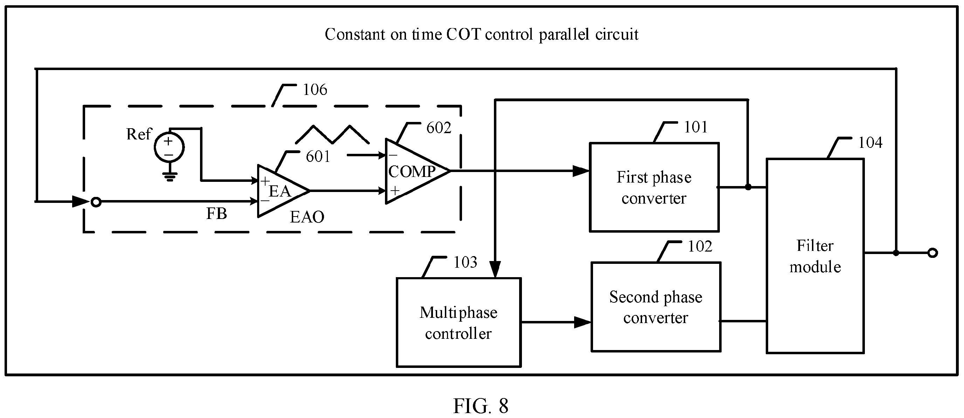

FIG. 8 is a schematic diagram of another structure of a COT parallel circuit according to this application.

As shown in FIG. 8, optionally, in this application, the signal processing module 106 includes a first operational amplifier 601 and a second comparator 602. A first reference signal is input to a first input terminal of the first operational amplifier 601. A second input terminal of the first operational amplifier 601 is electrically connected to the output terminal of the filter module 104. An output terminal of the first operational amplifier 601 is electrically connected to a first input terminal of the second comparator 602. The ramp compensation RAMP signal is input to a second input terminal of the second comparator 602. An output terminal of the second comparator 602 is electrically connected to the input terminal of the first phase converter 101.

In this application, the first operational amplifier may be configured to adjust, based on the first reference signal and the signal output by the filter module, a value of a signal output to the second comparator. The second comparator may output the first pulse signal when determining that a value of the RAMP signal is less than the value of the signal output by the first operational amplifier.

In this application, the first operational amplifier 601 is configured to adjust, by using a feedback, a frequency of a pulse signal output by the second comparator 602. The first reference signal is used to adjust a magnitude of a signal EAO. If a value of the first reference signal is greater than that of a power signal output by the filter module 104, the first operational amplifier 601 increases a value of the output signal EAO, and a frequency of the pulse signal output by the second comparator 602 is increased. Similarly, if the value of the first reference signal is less than that of the power signal output by the filter module 104, the first operational amplifier 601 reduces the value of the output signal EAO, and the frequency of the pulse signal output by the second comparator 602 is reduced. Further, the frequency of the pulse signal output by the second comparator 602 may be adjusted by adjusting a reference voltage, to further control intensity of an output current of the entire COT parallel circuit.

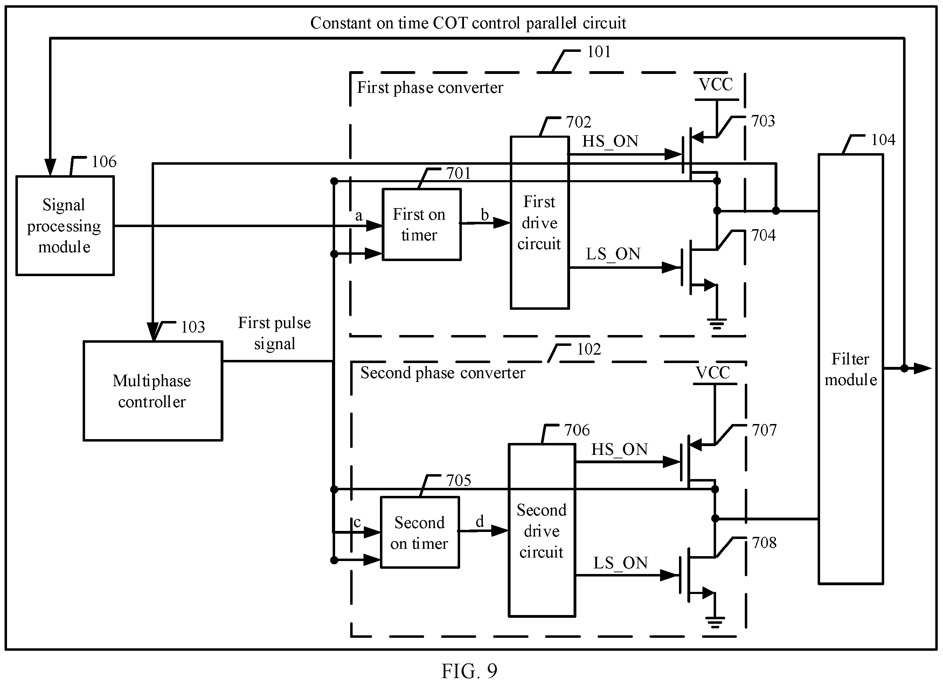

FIG. 9 is a schematic diagram of another structure of a COT parallel circuit according to this application.

As shown in FIG. 9, in this application, optionally, the first phase converter includes a first on timer 701, a first drive circuit 702, a sixth switch 703, and a seventh switch 704.

A first input terminal of the first on timer 701 is electrically connected to the output terminal of the signal processing module 106, a second input terminal of the first on timer 701 is electrically connected to a second input terminal of the second phase converter 102, and an output terminal of the first on timer 701 is electrically connected to an input terminal of the first drive circuit 702. A first output terminal of the first drive circuit 702 is electrically connected to a first terminal of the sixth switch 703, and a second output terminal of the first drive circuit 702 is electrically connected to a first terminal of the seventh switch 704. A second terminal of the sixth switch 703 is electrically connected to the external power supply, and a third terminal of the sixth switch 703 is electrically connected to the second input terminal of the first on timer 701, a second terminal of the seventh switch 704, and the first input terminal of the filter module 104. The second terminal of the seventh switch 704 is electrically connected to the first input terminal of the filter module 104, and a third terminal of the seventh switch 704 is grounded.

In this application, the first on timer 701 may output a first signal and a second signal based on signals output by the signal processing module 106 and the sixth switch 703. The first signal is used to indicate the first drive circuit 702 to close the sixth switch 703 and open the seventh switch 704, and the external power supply in the first phase converter 101 outputs the first power signal through the sixth switch 703 in a closed state. The second signal is used to indicate the first drive circuit 702 to close the seventh switch 704 and open the sixth switch 703, and the first phase converter 101 stops outputting the first power signal.

In this application, a structure of the second phase converter is similar to the structure of the first phase converter. For a specific implementation, refer to the structure shown in FIG. 9 for understanding. Details are not described herein again.

In this application, the signal processing module 106 outputs a pulse signal to the first on timer 701 based on the power signal output by the filter module 104 and the received RAMP signal. The first on timer 701 outputs a control signal b based on the pulse signal a and a current output by a VCC through the sixth switch 703. A high-level signal in the control signal b may control the first drive circuit 702 to close the sixth switch 703, so that the external power supply VCC connected to the sixth switch 703 inputs a current to the filter module 104, that is, the first phase converter outputs the first power signal. A low-level signal in the control signal b may control the first drive circuit 702 to open the sixth switch 703 and close the seventh switch 704. The multiphase controller 103 receives the first power signal and outputs the first pulse signal to the second on timer 705. The second on timer 705 outputs a control signal d based on the pulse signal c and a current output by the VCC through the eighth switch 707. A high-level signal in the control signal d may control the second drive module 706 to close the eighth switch 707, so that the external power supply VCC connected to the eighth switch 707 inputs a current to the filter module 104, that is, the second phase converter outputs the second power signal. A low-level signal in the control signal d may control the second drive circuit 706 to open the eighth switch 707 and close the ninth switch 708.

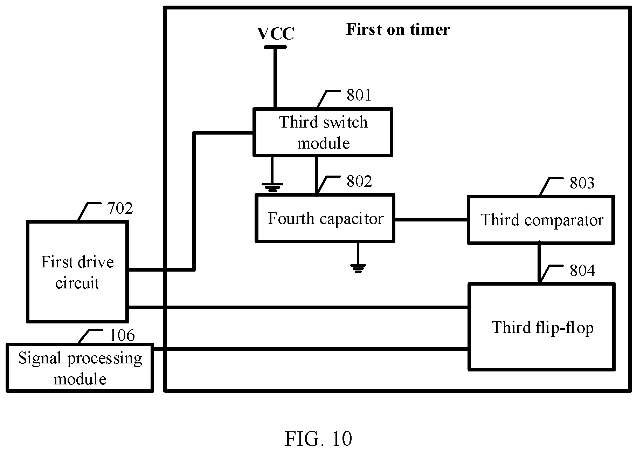

FIG. 10 is a schematic diagram of a structure of a first on timer according to this application.

As shown in FIG. 10, optionally, the first on timer may include a third switch module 801, a fourth capacitor 802, a third comparator 803, and a third flip-flop 804.

A first terminal of the third switch module 801 is electrically connected to the first drive circuit 702, a second terminal of the third switch module 801 is electrically connected to the external power supply, a third terminal of the third switch module is electrically connected to a first terminal of the fourth capacitor, and a fourth terminal of the third switch module is grounded. A second terminal of the fourth capacitor is electrically connected to a positive input terminal of the third comparator, and a third terminal of the fourth capacitor is grounded. An output terminal of the third comparator 803 is electrically connected to a first input terminal of the third flip-flop 804. A second input terminal of the third flip-flop 803 is electrically connected to the signal processing module 106, and an output terminal of the third flip-flop 804 is electrically connected to the first drive circuit 702.

In this application, the third switch module may control, based on a signal output by the first drive circuit, the external power supply to charge the fourth capacitor. When the signal output by the first drive circuit controls the sixth switch to be closed and controls the seventh switch to be open, a switch between the fourth capacitor and the ground cable in the third switch module is open. In this case, a switch between the external power supply and the fourth capacitor in the third switch module is closed, and the external power supply charges the fourth capacitor. When the signal output by the first drive circuit controls the sixth switch to be open and controls the seventh switch to be closed, the switch between the fourth capacitor and the ground cable in the third switch module is closed. In this case, the fourth capacitor empties charges, and a voltage of the fourth capacitor is zero.

In this application, a positive input terminal of the third comparator collects a voltage value of the fourth capacitor, and a reference signal is input to a negative input terminal of the third comparator. If the voltage value of the fourth capacitor during charging is greater than the reference signal input to the negative input terminal of the third comparator, the third comparator is inverted, and outputs a high-level signal (a fifth signal) to the third flip-flop. After the first input terminal of the third flip-flop receives a high-level signal (the second pulse signal) output by the signal processing module, the first signal is output, and the first drive circuit is controlled by the first signal to close the sixth switch and open the seventh switch. After the second input terminal of the third flip-flop receives a high-level signal, the second signal is output, and the first drive circuit opens the sixth switch and closes the seventh switch based on the second signal.

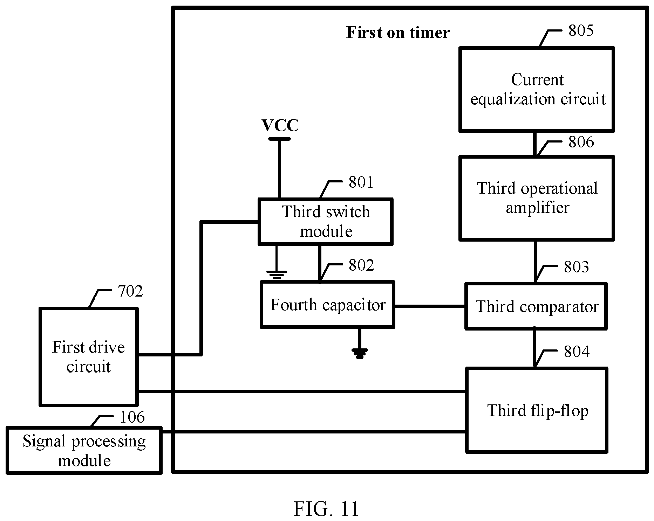

FIG. 11 is a schematic diagram of another structure of a first on timer according to this application.

As shown in FIG. 11, optionally, the first on timer may further include a current equalization circuit 805 and a third operational amplifier 806.

A first terminal of the current equalization circuit is electrically connected to the sixth switch and the second phase converter, and an output terminal of the current equalization circuit is electrically connected to a positive input terminal of the third operational amplifier. A negative input terminal of the third operational amplifier is electrically connected to the first phase converter.

In this application, the current equalization circuit may perform averaging on the first power signal and the second power signal that are output by the first phase converter and the second phase converter to obtain an average signal. After determining that the first power signal is less than the average signal, the third operational amplifier may reduce a value of a reference signal input to a second terminal of the third comparator. After determining that the first power signal is greater than the average signal, the third operational amplifier may increase the value of the reference signal input to the second terminal of the third comparator.

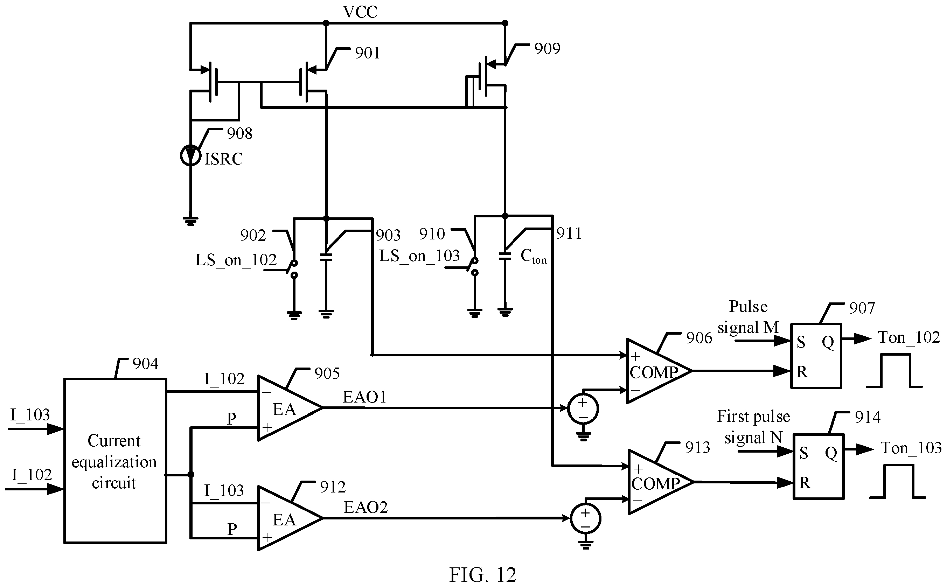

In this application, the first on timer and the second on timer have specific implementations. The following describes specific operating processes of the first on timer and the second on timer by using FIG. 12 as an example.

FIG. 12 is a schematic diagram of other structures of a first on timer and a second on timer according to this application.

As shown in FIG. 12, in this application, optionally, the first on timer 701 includes a switch 901, a switch 902, a capacitor 903, a current equalization circuit 904, an operational amplifier 905, a comparator 906, and a flip-flop 907. For ease of description, the third switch module 801 in FIG. 11 includes the switch 901 and the switch 902 in FIG. 12, the capacitor 903 in FIG. 12 is the fourth capacitor 802 in FIG. 11, the comparator 906 in FIG. 12 is the third comparator 803 in FIG. 11, the flip-flop 907 is the third flip-flop 804 in FIG. 11, the current equalization circuit 904 is the current equalization circuit 805 in FIG. 11, and the operational amplifier 905 is the third operational amplifier 806 in FIG. 11.

A first terminal of the switch 901 is electrically connected to a first terminal of a constant current source 908, a second terminal of the switch 901 is electrically connected to the external power supply VCC, and a third terminal of the switch 901 is electrically connected to a first terminal of the switch 902 and a first terminal of the capacitor 903. A first terminal of the switch 902 is electrically connected to the first terminal of the capacitor 903, a second terminal of the switch 902 is electrically connected to the first drive circuit 702, and a third terminal of the switch 902 is grounded. A second terminal of the capacitor 903 is grounded.

An input terminal of the current equalization circuit 904 is electrically connected to the sixth switch 703 and the second phase converter 102, and an output terminal of the current equalization circuit 904 is electrically connected to the operational amplifier 905.

An output terminal of the operational amplifier 905 is electrically connected to a negative input terminal of the comparator 906.

A positive input terminal of the comparator 906 is electrically connected to the first terminal of the capacitor 903 and the third terminal of the switch 901 through a sixth connection point, and an output terminal of the comparator 906 is electrically connected to a first input terminal of the flip-flop 907.

A second input terminal of the flip-flop 907 is electrically connected to the output terminal of the signal processing module 106, and an output terminal of the flip-flop 907 is electrically connected to the first drive circuit 702.

Optionally, the second on timer includes a switch 909, a switch 910, a capacitor 911, a current equalization circuit 905, an operational amplifier 912, a comparator 913, and a flip-flop 914.

A first terminal of the switch 909 is electrically connected to a first terminal of a constant current source 908, a second terminal of the switch 909 is electrically connected to the external power supply VCC, and a third terminal of the switch 909 is electrically connected to a first terminal of the switch 910 and a first terminal of the capacitor 911. A first terminal of the switch 910 is electrically connected to the first terminal of the capacitor 911, a second terminal of the switch 910 is electrically connected to the second drive circuit 706, and a third terminal of the switch 910 is grounded.

A second terminal of the capacitor 911 is grounded.

An input terminal of the current equalization circuit 904 is electrically connected to the eighth switch 707 and the first phase converter 101, and an output terminal of the current equalization circuit 904 is electrically connected to the operational amplifier 912.

An output terminal of the operational amplifier 912 is electrically connected to a negative input terminal of the comparator 913.

A positive input terminal of the comparator 913 is electrically connected to the first terminal of the capacitor 911 and the third terminal of the switch 609 through a seventh connection point, and an output terminal of the comparator 913 is electrically connected to a first input terminal of the flip-flop 914.

A second input terminal of the flip-flop 914 is electrically connected to the output terminal of the multiphase controller 103, and an output terminal of the flip-flop 914 is electrically connected to the second drive circuit 706.

In this application, the signal processing module 106 outputs a pulse signal M to the first on timer 701. In this case, the first on timer 701 receives the pulse signal M by using the second input terminal of the flip-flop 907, and the flip-flop 907 outputs a high-level signal, that is, a high-level part in a signal Ton_102. The high-level part may control the first drive circuit 702 to close the sixth switch 703 and open the seventh switch 704.

In this application, the constant current source 908 controls the switch 901 and the switch 909 to be closed, and the external power supply VCC charges the capacitor 903 and the capacitor 911 through the switch 901 and the switch 909. If the sixth switch 703 is in an open state and the seventh switch 704 is in a closed state, the switch 902 receives a control signal and is closed. In this case, voltages at both ends of the capacitor 903 are 0, and a voltage of the capacitor 903 that is collected by a positive electrode of the comparator 906 is 0. A value of a reference voltage collected by a negative electrode of the comparator 906 is greater than that of the voltage of the capacitor 903 that is collected by the positive electrode of the comparator 906, and the comparator 906 is not inverted. If the sixth switch 703 is in a closed state and the seventh switch 704 is in an open state, the switch 902 receives a control signal and is open, the switch 901 is closed, and the external power supply charges the capacitor 903. In this case, voltages at both ends of the capacitor 903 gradually increase. When a value of a reference voltage collected by the negative electrode of the comparator 906 is less than that of a voltage of the capacitor 903 that is collected by the positive electrode of the comparator 906, the comparator 906 is inverted, and the comparator 906 outputs a high-level signal to the first input terminal of the flip-flop 907. In this case, the output terminal of the flip-flop 907 outputs a low-level signal, that is, a low-level part in Ton_102 output by the output terminal. The low-level part may control the first drive circuit 702 to open the sixth switch 703 and close the seventh switch 704.

In this application, similarly, the multiphase controller 103 outputs a pulse signal N to the second on timer 705. In this case, the second on timer 705 receives the pulse signal N by using the second input terminal of the flip-flop 914, and the flip-flop 914 outputs a high-level signal, that is, a high-level part in a signal Ton_103. The high-level part may control the second drive circuit 706 to close the eighth switch 707 and open the ninth switch 708.

In this application, the constant current source 908 controls the switch 909 to be closed, and the external power supply VCC charges the capacitor 911 through the switch 909. If the eighth switch 707 is in an open state and the ninth switch 708 is in a closed state, the switch 610 receives a control signal and is closed. In this case, voltages at both ends of the seventh capacitor are 0, and a voltage of the capacitor 911 that is collected by a positive electrode of the comparator 913 is 0. A value of a reference voltage collected by a negative electrode of the comparator 913 is greater than that of the voltage of the capacitor 911 that is collected by the positive electrode of the comparator 913, and the comparator 913 is not inverted. If the eighth switch 707 is in a closed state and the ninth switch 708 is in an open state, the switch 910 receives a control signal and is open. In this case, voltages at both ends of the capacitor 911 gradually increase. When a value of a reference voltage collected by the negative electrode of the comparator 913 is less than that of a voltage of the capacitor 911 that is collected by the positive electrode of the comparator 913, the comparator 913 is inverted, and the comparator 913 outputs a high-level signal to an input terminal of the flip-flop 914. In this case, the output terminal of the flip-flop 914 outputs a low-level signal, that is, a low-level part in Ton_103 output by the output terminal. The low-level part may control the second drive circuit 706 to open the eighth switch 707 and close the ninth switch 708.

In this application, the current equalization circuit 904 collects a current I_102 at the sixth switch 703 in the first phase converter and a current I_103 at the eighth switch 707 in the second phase converter; and further, obtains, by using I_102 and I_103, an average current P obtained by performing averaging on output currents of the first phase converter and the second phase converter, and inputs the average current P to positive input terminals of the operational amplifier 905 and the operational amplifier 912. If the current I_102 input to a negative input terminal of the operational amplifier 905 is less than the average current P, the operational amplifier 906 increases a value of a reference voltage EAO1 input by the output terminal to the negative input terminal of the comparator 906. In this case, a larger voltage is required at the positive electrode of the comparator 906 so that the comparator 906 is inverted, a speed at which the comparator 906 is inverted is reduced, a time of outputting a high-level signal by the output terminal of the comparator 906 is extended, and the current I_102 at the sixth switch 703 is increased. Similarly, if the current I_102 input to the negative input terminal of the operational amplifier 905 is greater than the average current P, the operational amplifier 905 reduces a value of a reference voltage EAO2 input by the output terminal to the negative input terminal of the comparator 906. In this case, a smaller voltage may be input to the positive electrode of the comparator 906 so that the comparator 906 is inverted, a speed at which the comparator 906 is inverted is increased, a time of outputting a high-level signal by the output terminal of the comparator 906 is shortened, and the current I_102 at the sixth switch 703 is reduced. Similarly, a manner of adjusting the current I_103 at the eighth switch 707 by using the current equalization circuit 904, the operational amplifier 912, and the comparator 913 is similar to the foregoing manner of adjusting the current I_102 at the sixth switch 703. Details are not described herein again.

In this application, the current equalization circuit 904 has a specific implementation. The following embodiment describes in detail a possible implementation of the current equalization circuit 904.

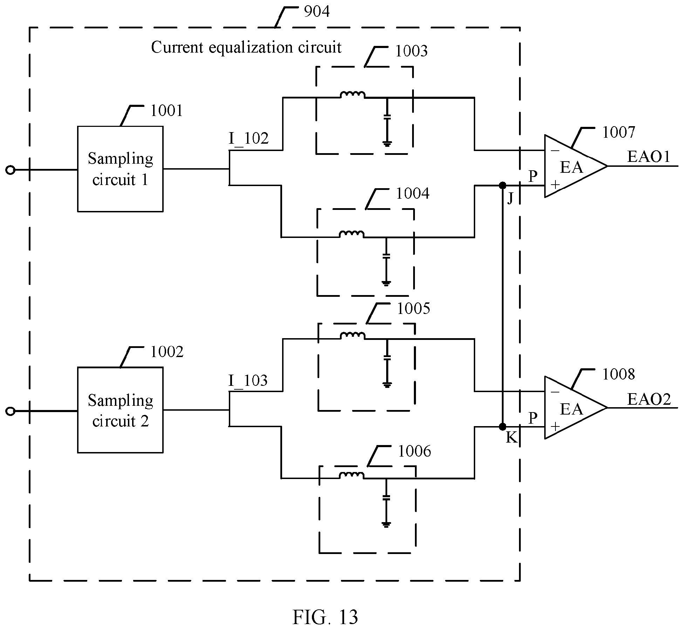

FIG. 13 is a schematic diagram of a structure of a current equalization circuit according to this application.

As shown in FIG. 13, in this application, the current equalization circuit 904 includes a first sampling circuit 1001, a second sampling circuit 1002, a filter 1003, a filter 1004, a filter 1005, and a filter 1006. The filter 1004 and the filter 1006 have a common node.

Similarly, for ease of description, an operational amplifier 1007 in FIG. 13, the operational amplifier 905 in FIG. 12, and the operational amplifier 806 in FIG. 11 are a same amplifier.

Optionally, the filter 1003 to the filter 1006 may be RC filters, or may be other filters. This is not specifically limited herein. In FIG. 13, only an RC filter is used as an example for description.

An input terminal of the first sampling circuit 1001 is electrically connected to the sixth switch 703, a first output terminal of the first sampling circuit 1001 is electrically connected to an input terminal of the filter 1003, and a second output terminal of the first sampling circuit 1001 is electrically connected to an input terminal of the filter 1004.

An output terminal of the filter 1003 is electrically connected to a negative input terminal of the operational amplifier 1007.

An output terminal of the filter 1004 is electrically connected to a positive input terminal of the operational amplifier 1007 and a positive input terminal of an operational amplifier 1008.

An input terminal of the second sampling circuit 1002 is electrically connected to the eighth switch 307, a first output terminal of the second sampling circuit 1002 is electrically connected to an input terminal of the filter 1005, and a second output terminal of the second sampling circuit 1002 is electrically connected to an input terminal of the filter 1006.

An output terminal of the filter 1005 is electrically connected to a negative input terminal of the operational amplifier 1008.

An output terminal of the filter 1006 is electrically connected to a positive input terminal of the operational amplifier 1007 and a positive input terminal of an operational amplifier 1008.

In this application, the first sampling circuit 1001 collects the current I_102 at the sixth switch, the first sampling circuit outputs the current I_102, and the filter 1003 filters the current I_102 and then inputs a filtered current to the negative input terminal of the operational amplifier 1007. The second sampling circuit collects the current I_103 at the eighth switch 307, the second sampling circuit 1002 outputs the current I_103, and the filter 1005 filters the current I_103 and then inputs a filtered current to the negative input terminal of the operational amplifier 1008. The first sampling circuit 1001 outputs the current I_102 to the filter 1004, and the filter 1004 filters the current I_102. Because the output terminal of the filter 1004 is electrically connected to the output terminal of the filter 1006, the current output by the filter 1004 and the current output by the filter 1006 are equalized at a point J and a point K. To be specific, an electrical signal P output to the operational amplifier 1007 and the operational amplifier 1008 at the point J and the point K is an electrical signal P (an average current signal) obtained by performing averaging on the current I_102 and the current I_103. If a value of the current I_102 input to the negative input terminal of the operational amplifier 1007 is less than a value of the electrical signal P, the operational amplifier 1007 increases a value of an output electrical signal EAO1. On the contrary, if the value of the current I_102 input to the negative input terminal of the operational amplifier 1007 is greater than the value of the electrical signal P, the operational amplifier 1007 reduces the value of the output electrical signal EAO1. Similarly, if a value of the current I_103 input to the negative input terminal of the operational amplifier 1008 is less than a value of the electrical signal P, the operational amplifier 1008 increases a value of an output electrical signal EAO2. On the contrary, if the value of the current I_103 input to the negative input terminal of the operational amplifier 1008 is greater than the value of the electrical signal P, the operational amplifier 1008 reduces the value of the output electrical signal EAO2.

In this application, the filter module included in the COT parallel circuit has a specific implementation. The specific implementation is described in the following embodiment.

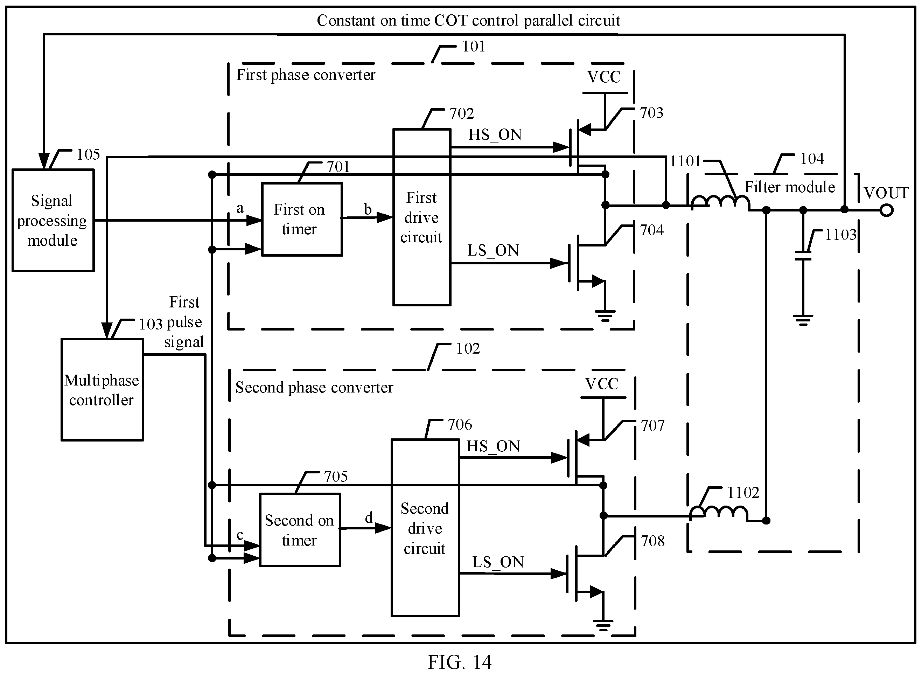

FIG. 14 is a schematic diagram of a structure of a COT multiphase parallel circuit according to this application.

As shown in FIG. 14, in this application, optionally, the filter module 104 may include a first inductor 1101, a second inductor 1102, and a third capacitor 1103.

A first terminal of the first inductor 1101 is electrically connected to the third terminal of the sixth switch 703 and the second terminal of the seventh switch 704, and a second terminal of the first inductor 1101 is electrically connected to a first terminal of the second inductor 1102 and a first terminal of the third capacitor 1103.

A first terminal of the second inductor 1102 is electrically connected to a third terminal of the eighth switch 707 and a fourth terminal of the ninth switch 708, and a second terminal of the second inductor 1102 is electrically connected to a first terminal of the third capacitor 1103.

A second terminal of the third capacitor 1103 is grounded.

In this application, if the sixth switch 703 is closed, the external power supply VCC may charge the first inductor 1101 through the sixth switch 703. If the sixth switch 703 is open and the seventh switch 704 is closed, the first inductor 1101 discharges to the output terminal of the filter module 104 and the seventh switch 704, and the third capacitor 1103 filters a current output by the first inductor 1101, so that the filter module 104 can output a stable ripple-free power signal. Similarly, if the eighth switch 707 is closed, the external power supply VCC may charge the second inductor 1102 through the eighth switch 707. If the eighth switch 707 is open and the ninth switch 708 is closed, the second inductor 1102 discharges to the output terminal of the filter module 104 and the ninth switch 708, and the third capacitor 1103 filters a current output by the second inductor 1102, so that the filter module 104 can output a stable ripple-free power signal.

In this application, optionally, if the COT parallel circuit includes more phase converters, the filter module 104 may include more inductors, and a connection manner and an operating manner of the other more inductors are similar to those of the second inductor 1102 described in the embodiment of FIG. 13. Details are not described herein.

In this application, the COT parallel circuit provided in the foregoing embodiments may be applied to other products in addition to the power supply device, for example, a vehicle-mounted power supply, a base station power supply, or another product related to direct current-to-direct current switching control.

The foregoing describes in detail the COT parallel circuit and the power supply device provided in embodiments of this application. Specific examples are used in this specification to describe the principles and embodiments of this application. The descriptions of the foregoing embodiments are merely intended to help understand the method of this application and the core ideas thereof. In addition, a person of ordinary skill in the art may make variations and modifications to this application in terms of the specific implementations and application scopes based on the ideas of this application.

## Claims

1. A constant on time COT control parallel circuit, comprising a first phase converter (101), a second phase converter (102), a multiphase controller (103), and a filter module (104), wherein
an output terminal of the first phase converter (101) is electrically connected to an input terminal of the multiphase controller (103) and a first input terminal of the filter module (104);
an input terminal of the second phase converter (102) is electrically connected to an output terminal of the multiphase controller (103), and an output terminal of the second phase converter (102) is electrically connected to a second input terminal of the filter module (104); and
the multiphase controller (103) is configured to control, in one period of a RAMP signal received by the COT parallel circuit and based on a first power signal output by the first phase converter (101), the second phase converter (102) to output a second power signal.
**characterized in that**
the multiphase controller (103) comprises a frequency divider (201), a first phase inverter (202), a first period control module (203), a second period control module (204), and a first OR gate (205), wherein
an input terminal of the frequency divider (201) is electrically connected to the output terminal of the first phase converter (101), and an output terminal of the frequency divider (201) is electrically connected to an input terminal of the first period control module (203) and an input terminal of the first phase inverter (202) through a first connection point;
an output terminal of the first phase inverter (202) is electrically connected to an input terminal of the second period control module (204);
an input terminal of the first OR gate (205) is electrically connected to an output terminal of the first period control module (203) and another input terminal of the first OR gate (205) is electrically connected to an output terminal of the second period control module (204);
the first period control module (203) and the second period control module (204) are configured to: collect an output period of the first power signal output by the first phase converter (101), and output a target signal based on the output period; and
the first OR gate (205) is configured to output a first pulse signal based on the target signal output by the first period control module (203) or the second period control module (204), wherein the first pulse signal is used to indicate the second phase converter to output the second power signal, wherein the first period control module (203) comprises a second phase inverter (301), a constant current source module (302), a first switch module (303), a second switch module (304), a capacitor module (305), a first flip-flop (307) and a first comparator (306), wherein the constant current source module (302) comprises a first constant current source (401), a second constant current source (402), and a third constant current source (403), the first switch module (303) comprises a first switch (404) and a second switch (405), the second switch module (304) comprises a third switch (406), a fourth switch (407), and a fifth switch (408) and the capacitor module (305) comprises a first capacitor (409) and a second capacitor (410);
a first terminal of the second phase inverter (301) is electrically connected to the output terminal of the frequency divider (201), and a second terminal of the second phase inverter (301) is electrically connected to a first terminal of the second switch module (304);
a first terminal of the first switch module (303) is electrically connected to the output terminal of the frequency divider (201), a second terminal of the first switch module (303) is electrically connected to a first terminal of the constant current source module (302), and a third terminal of the first switch module (303) is electrically connected to a first terminal of the capacitor module (305);
a second terminal of the second switch module (304) is electrically connected to a second terminal of the constant current source module (302), and a third terminal of the second switch module (304) is grounded;
a third terminal of the capacitor module (305) is grounded;
a negative input terminal of the first comparator (306) is electrically connected to the first switch module (303) and the first capacitor (409) through a second connection point, and a positive input terminal of the first comparator (306) is electrically connected to the first switch module (303) and the second capacitor (410) through a third connection point; a first input terminal of the first flip-flop (307) is electrically connected to the first comparator (306), a second input terminal of the first flip-flop (307) is electrically connected to the frequency divider (201), and an output terminal of the first flip-flop (307) is electrically connected to the second switch module (304);
first terminals of the first switch (404) and the second switch (405) are electrically connected to the output terminal of the frequency divider (201), a second terminal of the first switch (404) is electrically connected to a first terminal of the first constant current source (401), a third terminal of the first switch (404) is electrically connected to a first terminal of the first capacitor (409), a second terminal of the second switch (405) is electrically connected to a first terminal of the second constant current source (402), and a third terminal of the second switch (405) is electrically connected to a first terminal of the second capacitor (410); a first terminal of the third switch (406) is electrically connected to the second phase inverter (301), a second terminal of the third switch (406) is electrically connected to the third constant current source (403), a third terminal of the third switch (406) is grounded, a first terminal of the fourth switch (407) is electrically connected to the first terminal of the first capacitor (409) and the third terminal of the first switch (404) through a fourth connection point, a second terminal of the fourth switch (407) is electrically connected to the output terminal of the first flip-flop (307), a third terminal of the fourth switch (406) is grounded, a first terminal of the fifth switch (408) is electrically connected to the first terminal of the second capacitor (410) and the third terminal of the second switch (405) through a fifth connection point, a second terminal of the fifth switch (408) is electrically connected to the output terminal of the first flip-flop (307), and a third terminal of the fifth switch (408) is grounded; and second terminals of the first constant current source (401) and the second constant current source (402) are electrically connected to an external power supply;
the first switch module (303) is configured to control, based on different signals output by the frequency divider (201), a time of charging the first capacitor (409) and the second capacitor (410) in the capacitor module (305) by the constant current source module (302), wherein the time of charging the first capacitor (409) and the second capacitor (410) in the capacitor module (305) by the constant current source module (302) is the same as the output period of the first power signal;
the second switch module (304) is configured to control, based on a signal output by the second phase inverter (301), the first capacitor (409) discharge; and
the first comparator (306) is configured to: when the first capacitor discharges (409), output the target signal when determining that a voltage value of the first capacitor (409) is less than a voltage value of the second capacitor (410);
the first flip-flop (307) is configured to control, based on electrical signals output by the first comparator (306) and the frequency divider (201), some switches in the second switch module (304) to be closed; and the second switch module (304) is further configured to control, by closing some switches and based on a signal output by the first flip-flop (307), the first capacitor (409) and the second capacitor (410) to empty charges
and wherein the topology and the operating principle of the second period control module are identical to those of the first period control module.

2. The COT parallel circuit according to claim 1, wherein the COT parallel circuit further comprises a signal processing module (106);
an input terminal of the signal processing module (106) is electrically connected to an output terminal of the filter module (104), and an output terminal of the signal processing module (106) is electrically connected to an input terminal of the first phase converter (101); and
the signal processing module (106) is configured to output a second pulse signal based on the received RAMP signal and a signal output by the filter module (104), wherein the second pulse signal is used to indicate the first phase converter to output the first power signal.

3. The COT parallel circuit according to claim 2, wherein the signal processing module (106) comprises a first operational amplifier (601) and a second comparator (602);
a first reference signal is input to a first input terminal of the first operational amplifier (601), a second input terminal of the first operational amplifier (601) is electrically connected to the output terminal of the filter module (104), and an output terminal of the first operational amplifier (601) is electrically connected to a first input terminal of the second comparator (602);
the ramp compensation RAMP signal is input to a second input terminal of the second comparator (602), and an output terminal of the second comparator (602) is electrically connected to the input terminal of the first phase converter (101);
the first operational amplifier (601) is configured to adjust, based on the first reference signal and the signal output by the filter module (104), a value of a signal output to the second comparator (602); and
the second comparator (602) is configured to output the first pulse signal when determining that a value of the RAMP signal is less than the value of the signal output by the first operational amplifier (601).

4. The COT parallel circuit according to claim 3, wherein the first phase converter (101) comprises a first on timer (701), a first drive circuit (702), a sixth switch (703), and a seventh switch (704);
a first input terminal of the first on timer (701) is electrically connected to the output terminal of the signal processing module (106), a second input terminal of the first on timer (701) is electrically connected to a second input terminal of the second phase converter (102), and an output terminal of the first on timer (701) is electrically connected to an input terminal of the first drive circuit (702);
a first output terminal of the first drive circuit (702) is electrically connected to a first terminal of the sixth switch (703), and a second output terminal of the first drive circuit (702) is electrically connected to a first terminal of the seventh switch (704);
a second terminal of the sixth switch (703) is electrically connected to the external power supply, and a third terminal of the sixth switch (703) is electrically connected to the second input terminal of the first on timer (701), a second terminal of the seventh switch (704), and the first input terminal of the filter module (104);
the second terminal of the seventh switch (704) is electrically connected to the first input terminal of the filter module (104), and a third terminal of the seventh switch (704) is grounded; and
the first on timer (701) is configured to output a first signal and a second signal based on the second pulse signal output by the signal processing module (106) and a signal output by the sixth switch (703), wherein the first signal is used to indicate the first drive circuit (702) to close the sixth switch (703) and open the seventh switch (704), the external power supply in the first phase converter outputs the first power signal through the sixth switch (703) in a closed state, the second signal is used to indicate the first drive circuit (702) to close the seventh switch (704) and open the sixth switch (703), and the first phase converter (101) stops outputting the first power signal.

5. The COT parallel circuit according to claim 4, wherein the second phase converter (102) comprises a second on timer (705), a second drive circuit (706), an eighth switch (707), and a ninth switch (708);
a first input terminal of the second on timer (705) is electrically connected to the output terminal of the multiphase controller (103), a second input terminal of the second on timer (705) is electrically connected to a second input terminal of the first phase converter (101), and an output terminal of the second on timer (705) is electrically connected to an input terminal of the second drive circuit (706);
a first output terminal of the second drive circuit (706) is electrically connected to a first terminal of the eighth switch (707), and a second output terminal of the second drive circuit (706) is electrically connected to a first terminal of the ninth switch (708);
a second terminal of the eighth switch (707) is electrically connected to the external power supply, a third terminal of the eighth switch (707) is electrically connected to the second input terminal of the second on timer (705), a second terminal of the ninth switch (708), and the second input terminal of the filter module (104);
the second terminal of the ninth switch (708) is electrically connected to the second input terminal of the filter module (104), and a third terminal of the ninth switch (708) is grounded; and
and wherein the COT parallel circuit further comprises a second conduction delay timing circuit which is configured to output a third signal and a fourth signal based on the first pulse signal output by the multiphase controller (103) and a signal output by the eighth switch (707), wherein the third signal is used to indicate the second drive circuit (706) to close the eighth switch (707) and open the ninth switch (708), the external power supply in the second phase converter (102) outputs the second power signal through the eighth switch (707) in a closed state, the fourth signal is used to indicate the second drive circuit (706) to close the ninth switch (708) and open the eighth switch (707), and the second phase converter (102) stops outputting the second power signal.

6. The COT parallel circuit according to claim 5, wherein the first on timer (701) comprises a third switch module (801), a fourth capacitor (802), a third comparator (803), and a third flip-flop (804);
a first terminal of the third switch module (801) is electrically connected to the first drive circuit (702), a second terminal of the third switch module (801) is electrically connected to the external power supply, a third terminal of the third switch module (801) is electrically connected to a first terminal of the fourth capacitor (802), and a fourth terminal of the third switch module (801) is grounded;
a second terminal of the fourth capacitor (802) is electrically connected to a positive input terminal of the third comparator (803), and a third terminal of the fourth capacitor (802) is grounded;
an output terminal of the third comparator (803) is electrically connected to a first input terminal of the third flip-flop (804);
a second input terminal of the third flip-flop (804) is electrically connected to the signal processing module (106), and an output terminal of the third flip-flop (804) is electrically connected to the first drive circuit (702);
the third switch module (801) is configured to control, based on a signal output by the first drive circuit (702), the external power supply to charge the fourth capacitor (802);
the third comparator (803) is configured to output a fifth signal when determining that a value of a reference signal received by a second input terminal of the third comparator (803) is less than a voltage value of the fourth capacitor (802); and
the third flip-flop (804) is configured to: output the first signal based on a pulse signal output by the signal processing module (106), and output the second signal based on the fifth signal.

7. The COT parallel circuit according to claim 6, wherein the first on timer (701) further comprises a current equalization circuit (805) and a third operational amplifier (806), the current equalization circuit (805) comprises a plurality of RC filters, and there is a common node between some RC filters;
a first terminal of the current equalization circuit (805) is electrically connected to the sixth switch (703) and the second phase converter (102), and an output terminal of the current equalization circuit (805) is electrically connected to the third operational amplifier (806);
the current equalization circuit (805) is configured to: perform averaging on the first power signal and the second power signal that are output by the first phase converter (101) and the second phase converter (102) to obtain an average signal, input a filtered first power signal to a positive input terminal of the third operational amplifier (806), and input the average signal to a negative input terminal of the third operational amplifier (806); and
the third operational amplifier (806) is configured to: after determining that the filtered first power signal is less than the average signal, reduce a value of a reference signal input to a second terminal of the third comparator (803); or after determining that the first power signal is greater than the average signal, increase the value of the reference signal input to the second terminal of the third comparator (803).

8. The COT parallel circuit according to claim 7, wherein the filter module (104) comprises a first inductor (1101), a second inductor (1102), and a third capacitor (1103);
a first terminal of the first inductor (1101) is electrically connected to the third terminal of the sixth switch (703) and the second terminal of the seventh switch (704), and a second terminal of the first inductor (1101) is electrically connected to a second terminal of the second inductor (1102) and a first terminal of the third capacitor (1103);
a first terminal of the second inductor (1102) is electrically connected to the third terminal of the eighth switch (707) and the second terminal of the ninth switch (708), and the second terminal of the second inductor (1102) is electrically connected to the first terminal of the third capacitor (1103);
a second terminal of the third capacitor (1103) is grounded; and
the first inductor (1101), the second inductor (1102), and the third capacitor (1103) are jointly configured to filter output ripples of the first power signal and the second power signal.

9. 44 . A power supply device, comprising a controller and a constant on time COT control parallel circuit, wherein the COT parallel circuit is the COT parallel circuit according to any one of claims 1 to 8.

## Patentansprüche

1. Parallelschaltung zum zeitkonstanten (constant on time - COT-) Steuern, umfassend einen ersten Phasenwandler (101), einen zweiten Phasenwandler (102), einen Mehrphasenregler (103) und ein Filtermodul (104), wobei
eine Ausgangsklemme des ersten Phasenwandlers (101) elektrisch mit einer Eingangsklemme des Mehrphasenreglers (103) und einer ersten Eingangsklemme des Filtermoduls (104) verbunden ist; eine Eingangsklemme des zweiten Phasenwandlers (102) elektrisch mit einer Ausgangsklemme des Mehrphasenreglers (103) verbunden ist, und eine Ausgangsklemme des zweiten Phasenwandlers (102) elektrisch mit einer zweiten Eingangsklemme des Filtermoduls (104) verbunden ist; und
der Mehrphasenregler (103) dazu konfiguriert ist, in einer Periode eines durch die COT-Parallelschaltung empfangenen RAMP-Signals und basierend auf einem durch den ersten Phasenwandler (101) ausgegebenen ersten Leistungssignals den zweiten Phasenwandler (102) so zu steuern, dass er ein zweites Leistungssignal ausgibt,
**dadurch gekennzeichnet, dass**
der Mehrphasenregler (103) einen Frequenzteiler (201), einen ersten Phasenwechselrichter (202), ein erstes Periodensteuermodul (203), ein zweites Periodensteuermodul (204) und ein erstes ODER-Gatter (205) umfasst, wobei eine Eingangsklemme des Frequenzteilers (201) elektrisch mit der Ausgangsklemme des ersten Phasenwechselrichters (101) verbunden ist und eine Ausgangsklemme des Frequenzteilers (201) elektrisch mit einer Eingangsklemme des ersten Periodensteuermoduls (203) und einer Eingangsklemme des ersten Phasenwechselrichters (202) über einen ersten Verbindungspunkt verbunden ist;
eine Ausgangsklemme des ersten Phasenwechselrichters (202) elektrisch mit einer Eingangsklemme des zweiten Periodensteuermoduls (204) verbunden ist;
eine Eingangsklemme des ersten ODER-Gatters (205) elektrisch mit einer Ausgangsklemme des ersten Periodensteuermoduls (203) verbunden ist und eine andere Eingangsklemme des ersten ODER-Gatters (205) elektrisch mit einer Ausgangsklemme des zweiten Periodensteuermoduls (204) verbunden ist;
das erste Periodensteuermodul (203) und das zweite Periodensteuermodul (204) zu Folgendem konfiguriert sind: Erfassen einer Ausgangsperiode des ersten Leistungssignals, das durch den ersten Phasenwandler (101) ausgegeben wird, und Ausgeben eines Zielsignals auf Grundlage der Ausgangsperiode; und
das erste ODER-Gatter (205) dazu konfiguriert ist, ein erstes Impulssignal auf Grundlage des durch das erste Periodensteuermodul (203) oder das zweite Periodensteuermodul (204) ausgegebenen Zielsignals auszugeben, wobei das erste Impulssignal verwendet wird, um dem zweiten Phasenwandler anzuzeigen, das zweite Leistungssignal auszugeben, wobei das erste Periodensteuermodul (203) einen zweiten Phasenwechselrichter (301), ein Konstantstromquellenmodul (302), ein erstes Schaltmodul (303), ein zweites Schaltmodul (304), ein Kondensatormodul (305) ein erstes Flipflop (307) und einen ersten Komparator (306) umfasst, wobei das Konstantstromquellenmodul (302) eine erste Konstantstromquelle (401), eine zweite Konstantstromquelle (402) und eine dritte Konstantstromquelle (403) umfasst, das erste Schaltmodul (303) einen ersten Schalter (404) und einen zweiten Schalter (405) umfasst, das zweite Schaltmodul (304) einen dritten Schalter (406), einen vierten Schalter (407) und einen fünften Schalter (408) umfasst und das Kondensatormodul (305) einen ersten Kondensator (409) und einen zweiten Kondensator (410) umfasst;
eine erste Klemme des zweiten Phasenwechselrichters (301) elektrisch mit der Ausgangsklemme des Frequenzteilers (201) verbunden ist und eine zweite Klemme des zweiten Phasenwechselrichters (301) elektrisch mit einer ersten Klemme des zweiten Schaltmoduls (304) verbunden ist;
eine erste Klemme des ersten Schaltmoduls (303) elektrisch mit der Ausgangsklemme des Frequenzteilers (201) verbunden ist, eine zweite Klemme des ersten Schaltmoduls (303) elektrisch mit einer ersten Klemme des Konstantstromquellenmoduls (302) verbunden ist und eine dritte Klemme des ersten Schaltmoduls (303) elektrisch mit einer ersten Klemme des Kondensatormoduls (305) verbunden ist;
eine zweite Klemme des zweiten Schaltmoduls (304) elektrisch mit einer zweiten Klemme des Konstantstromquellenmoduls (302) verbunden ist und eine dritte Klemme des zweiten Schaltmoduls (304) geerdet ist;
eine dritte Klemme des Kondensatormoduls (305) geerdet ist; eine negative Eingangsklemme des ersten Komparators (306) über einen zweiten Verbindungspunkt elektrisch mit dem ersten Schaltmodul (303) und dem ersten Kondensator (409) verbunden ist, und eine positive Eingangsklemme des ersten Komparators (306) über einen dritten Verbindungspunkt elektrisch mit dem ersten Schaltmodul (303) und dem zweiten Kondensator (410) verbunden ist; eine erste Eingangsklemme des ersten Flipflops (307) elektrisch mit dem ersten Komparator (306) verbunden ist, eine zweite Eingangsklemme des ersten Flipflops (307) elektrisch mit dem Frequenzteiler (201) verbunden ist und eine Ausgangsklemme des ersten Flipflops (307) elektrisch mit dem zweiten Schaltmodul (304) verbunden ist;
erste Klemmen des ersten Schalters (404) und des zweiten Schalters (405) elektrisch mit der Ausgangsklemme des Frequenzteilers (201) verbunden sind, eine zweite Klemme des ersten Schalters (404) elektrisch mit einer ersten Klemme der ersten Konstantstromquelle (401) verbunden ist, eine dritte Klemme des ersten Schalters (404) elektrisch mit einer ersten Klemme des ersten Kondensators (409) verbunden ist, eine zweite Klemme des zweiten Schalters (405) elektrisch mit einer ersten Klemme der zweiten Konstantstromquelle (402) verbunden ist und eine dritte Klemme des zweiten Schalters (405) elektrisch mit einer ersten Klemme des zweiten Kondensators (410) verbunden ist; eine erste Klemme des dritten Schalters (406) elektrisch mit dem zweiten Phasenwechselrichter (301) verbunden ist, eine zweite Klemme des dritten Schalters (406) elektrisch mit der dritten Konstantstromquelle (403) verbunden ist, eine dritte Klemme des dritten Schalters (406) geerdet ist, eine erste Klemme des vierten Schalters (407) elektrisch mit der ersten Klemme des ersten Kondensators (409) und der dritten Klemme des ersten Schalters (404) über einen vierten Verbindungspunkt verbunden ist, eine zweite Klemme des vierten Schalters (407) elektrisch mit der Ausgangsklemme des ersten Flipflops (307) verbunden ist, eine dritte Klemme des vierten Schalters (406) geerdet ist, eine erste Klemme des fünften Schalters (408) elektrisch mit der ersten Klemme des zweiten Kondensators (410) und der dritten Klemme des zweiten Schalters (405) über einen fünften Verbindungspunkt verbunden ist, eine zweite Klemme des fünften Schalters (408) elektrisch mit der Ausgangsklemme des ersten Flipflops (307) verbunden ist und eine dritte Klemme des fünften Schalters (408) geerdet ist; und zweite Klemmen der ersten Konstantstromquelle (401) und der zweiten Konstantstromquelle (402) elektrisch mit einer externen Stromversorgung verbunden sind;
das erste Schaltmodul (303) dazu konfiguriert ist, auf Grundlage unterschiedlicher Signale, die durch den Frequenzteiler (201) ausgegeben werden, eine Zeit des Aufladens des ersten Kondensators (409) und des zweiten Kondensators (410) in dem Kondensatormodul (305) durch das Konstantstromquellenmodul (302) zu steuern, wobei die Zeit des Aufladens des ersten Kondensators (409) und des zweiten Kondensators (410) in dem Kondensatormodul (305) durch das Konstantstromquellenmodul (302) die gleiche ist wie die Ausgangsperiode des ersten Leistungssignals;
das zweite Schaltmodul (304) dazu konfiguriert ist, den ersten Kondensator (409) auf Grundlage eines durch den zweiten Phasenwechselrichter (301) ausgegebenen Signal zu steuern, zum Entladen zu steuern; und
der erste Komparator (306) zu Folgendem konfiguriert ist: wenn sich der erste Kondensator entlädt (409), Ausgeben des Zielsignals, wenn bestimmt wird, dass ein Spannungswert des ersten Kondensators (409) kleiner als ein Spannungswert des zweiten Kondensators (410) ist;
das erste Flipflop (307) dazu konfiguriert ist, auf Grundlage von elektrischen Signalen, die durch den ersten Komparator (306) und den Frequenzteiler (201) ausgegeben werden, einige Schalter in dem zweiten Schaltmodul (304) so zu steuern, dass sie geschlossen werden; und das zweite Schaltmodul (304) ferner dazu konfiguriert ist, durch das Schließen einiger Schalter und auf Grundlage eines durch das erste Flipflop (307) ausgegebenen Signals den ersten Kondensator (409) und den zweiten Kondensator (410) so zu steuern, dass sie sich entladen, und wobei die Topologie und das Funktionsprinzip des zweiten Periodensteuermoduls identisch mit denen des ersten Periodensteuermoduls sind.

2. COT-Parallelschaltung nach Anspruch 1, wobei die COT-Parallelschaltung ferner ein Signalverarbeitungsmodul (106) umfasst;
wobei eine Eingangsklemme des Signalverarbeitungsmoduls (106) elektrisch mit einer Ausgangsklemme des Filtermoduls (104) verbunden ist und eine Ausgangsklemme des Signalverarbeitungsmoduls (106) elektrisch mit einer Eingangsklemme des ersten Phasenwandlers (101) verbunden ist; und
wobei das Signalverarbeitungsmodul (106) dazu konfiguriert ist, auf Grundlage des empfangenen RAMP-Signals und eines durch das Filtermodul (104) ausgegebenen Signals ein zweites Impulssignal auszugeben, wobei das zweite Impulssignal verwendet wird, um dem ersten Phasenumwandler anzuzeigen, dass erste Leistungssignal auszugeben.

3. COT-Parallelschaltung nach Anspruch 2, wobei das Signalverarbeitungsmodul (106) einen ersten Operationsverstärker (601) und einen zweiten Komparator (602) umfasst;
wobei ein erstes Referenzsignal in eine erste Eingangsklemme des ersten Operationsverstärkers (601) eingegeben wird, eine zweite Eingangsklemme des ersten Operationsverstärkers (601) elektrisch mit der Ausgangsklemme des Filtermoduls (104) verbunden ist und eine Ausgangsklemme des ersten Operationsverstärkers (601) elektrisch mit einer ersten Eingangsklemme des zweiten Komparators (602) verbunden ist; wobei das Rampenkompensationssignal RAMP in eine zweite Eingangsklemme des zweiten Komparators (602) eingegeben wird und eine Ausgangsklemme des zweiten Komparators (602) elektrisch mit der Eingangsklemme des ersten Phasenwandlers (101) verbunden ist;
wobei der erste Operationsverstärker (601) dazu konfiguriert ist, auf Grundlage des ersten Referenzsignals und des durch das Filtermodul (104) ausgegebenen Signals einen Wert eines an den zweiten Komparator (602) ausgegebenen Signals einzustellen; und
wobei der zweite Komparator (602) dazu konfiguriert ist, das erste Impulssignal auszugeben, wenn bestimmt wird, dass ein Wert des RAMP-Signals kleiner ist als der Wert des durch den ersten Operationsverstärker (601) ausgegebenen Signals.

4. COT-Parallelschaltung nach Anspruch 3, wobei der erste Phasenumwandler (101) einen ersten Einschaltzeitgeber (701), eine erste Treiberschaltung (702), einen sechsten Schalter (703) und einen siebten Schalter (704) umfasst;
eine erste Eingangsklemme des ersten Einschaltzeitgebers (701) elektrisch mit der Ausgangsklemme des Signalverarbeitungsmoduls (106) verbunden ist, eine zweite Eingangsklemme des ersten Einschaltzeitgebers (701) elektrisch mit einer zweiten Eingangsklemme des zweiten Phasenwandlers (102) verbunden ist und eine Ausgangsklemme des ersten Einschaltzeitgebers (701) elektrisch mit einer Eingangsklemme der ersten Treiberschaltung (702) verbunden ist;
eine erste Ausgangsklemme der ersten Treiberschaltung (702) elektrisch mit einer ersten Klemme des sechsten Schalters (703) verbunden ist und eine zweite Ausgangsklemme der ersten Treiberschaltung (702) elektrisch mit einer ersten Klemme des siebten Schalters (704) verbunden ist;
eine zweite Klemme des sechsten Schalters (703) elektrisch mit der externen Stromversorgung verbunden ist und eine dritte Klemme des sechsten Schalters (703) elektrisch mit der zweiten Eingangsklemme des ersten Einschaltzeitgebers (701), einer zweiten Klemme des siebten Schalters (704) und der ersten Eingangsklemme des Filtermoduls (104) verbunden ist;
die zweite Klemme des siebten Schalters (704) elektrisch mit der ersten Eingangsklemme des Filtermoduls (104) verbunden ist und eine dritte Klemme des siebten Schalters (704) geerdet ist; und
wobei der erste Einschaltzeitgeber (701) dazu konfiguriert ist, ein erstes Signal und ein zweites Signal auf Grundlage des zweiten Impulssignals, das durch das Signalverarbeitungsmodul (106) ausgegeben wird, und eines Signals, das durch den sechsten Schalter (703) ausgegeben wird, auszugeben, wobei das erste Signal verwendet wird, um der ersten Treiberschaltung (702) anzugeben, den sechsten Schalter (703) zu schließen und den siebten Schalter (704) zu öffnen, die externe Stromversorgung im ersten Phasenumwandler das erste Leistungssignal über den sechsten Schalter (703) in einem geschlossenen Zustand ausgibt, das zweite Signal verwendet wird, um der ersten Treiberschaltung (702) anzugeben, den siebten Schalter (704) zu schließen und den sechsten Schalter (703) zu öffnen, und der erste Phasenumwandler (101) das Ausgeben des ersten Leistungssignals beendet.

5. COT-Parallelschaltung nach Anspruch 4, wobei der zweite Phasenumwandler (102) einen zweiten Einschaltzeitgeber (705), eine zweite Treiberschaltung (706), einen achten Schalter (707) und einen neunten Schalter (708) umfasst;
wobei eine erste Eingangsklemme des zweiten Einschaltzeitgebers (705) elektrisch mit der Ausgangsklemme des Mehrphasenreglers (103) verbunden ist, eine zweite Eingangsklemme des zweiten Einschaltzeitgebers (705) elektrisch mit einer zweiten Eingangsklemme des ersten Phasenwandlers (101) verbunden ist und eine Ausgangsklemme des zweiten Einschaltzeitgebers (705) elektrisch mit einer Eingangsklemme der zweiten Treiberschaltung (706) verbunden ist;
eine erste Ausgangsklemme der zweiten Treiberschaltung (706) elektrisch mit einer ersten Klemme des achten Schalters (707) verbunden ist und eine zweite Ausgangsklemme der zweiten Treiberschaltung (706) elektrisch mit einer ersten Klemme des neunten Schalters (708) verbunden ist;
eine zweite Klemme des achten Schalters (707) elektrisch mit der externen Stromversorgung verbunden ist und eine dritte Klemme des achten Schalters (707) elektrisch mit der zweiten Eingangsklemme des zweiten Einschaltzeitgebers (705), einer zweiten Klemme des neunten Schalters (708) und der zweiten Eingangsklemme des Filtermoduls (104) verbunden ist;
die zweite Klemme des neunten Schalters (708) elektrisch mit der zweiten Eingangsklemme des Filtermoduls (104) verbunden ist und eine dritte Klemme des neunten Schalters (708) geerdet ist; und
und wobei die COT-Parallelschaltung ferner eine zweite Leitungsverzögerungszeitschaltung umfasst, die dazu konfiguriert ist, ein drittes Signal und ein viertes Signal auf Grundlage des ersten Impulssignals, das durch den Mehrphasenregler (103) ausgegeben wird, und eines Signals, das durch den achten Schalter (707) ausgegeben wird, auszugeben, wobei das dritte Signal verwendet wird, um der zweiten Treiberschaltung (706) anzugeben, den achten Schalter (707) zu schließen und den neunten Schalter (708) zu öffnen, die externe Stromversorgung im zweiten Phasenumwandler (102) das zweite Leistungssignal über den achten Schalter (707) in einem geschlossenen Zustand ausgibt, das vierte Signal verwendet wird, um der zweiten Treiberschaltung (706) anzugeben, den neunten Schalter (708) zu schließen und den achten Schalter (707) zu öffnen, und der zweite Phasenumwandler (102) die Ausgabe des zweiten Leistungssignals beendet.

6. COT-Parallelschaltung nach Anspruch 5, wobei der erste Einschaltzeitgeber (701) ein drittes Schaltmodul (801), einen vierten Kondensator (802), einen dritten Komparator (803) und ein drittes Flipflop (804) umfasst;
wobei eine erste Klemme des dritten Schaltmoduls (801) elektrisch mit der ersten Treiberschaltung (702) verbunden ist, eine zweite Klemme des dritten Schaltmoduls (801) elektrisch mit der externen Stromversorgung verbunden ist, eine dritte Klemme des dritten Schaltmoduls (801) elektrisch mit einer ersten Klemme des vierten Kondensators (802) verbunden ist und eine vierte Klemme des dritten Schaltmoduls (801) geerdet ist;
wobei eine zweite Klemme des vierten Kondensators (802) elektrisch mit einer positiven Eingangsklemme des dritten Komparators (803) verbunden ist und eine dritte Klemme des vierten Kondensators (802) geerdet ist;
wobei eine Ausgangsklemme des dritten Komparators (803) elektrisch mit einer ersten Eingangsklemme des dritten Flipflops (804) verbunden ist;
wobei eine zweite Eingangsklemme des dritten Flipflops (804) elektrisch mit dem Signalverarbeitungsmodul (106) verbunden ist und eine Ausgangsklemme des dritten Flipflops (804) elektrisch mit der ersten Treiberschaltung (702) verbunden ist;
wobei das dritte Schaltmodul (801) dazu konfiguriert ist, auf Grundlage eines von der ersten Treiberschaltung (702) ausgegebenen Signals die externe Stromversorgung zu steuern, um den vierten Kondensator (802) zu laden;
wobei der dritte Komparator (803) dazu konfiguriert ist, ein fünftes Signal auszugeben, wenn bestimmt wird, dass ein Wert eines durch eine zweite Eingangsklemme des dritten Komparators (803) empfangenen Referenzsignals kleiner als ein Spannungswert des vierten Kondensators (802) ist; und
wobei das dritte Flipflop (804) zu Folgendem konfiguriert ist: Ausgeben des ersten Signals auf Grundlage eines vom Signalverarbeitungsmodul (106) ausgegebenen Impulssignals und Ausgeben des zweiten Signal auf Grundlage des fünften Signals.

7. COT-Parallelschaltung nach Anspruch 6, wobei der erste Einschaltzeitgeber (701) ferner eine Stromausgleichsschaltung (805) und einen dritten Operationsverstärker (806) umfasst, die Stromausgleichsschaltung (805) eine Vielzahl von RC-Filtern umfasst und es einen gemeinsamen Knotenpunkt zwischen einigen RC-Filtern gibt;
wobei eine erste Klemme der Stromausgleichsschaltung (805) elektrisch mit dem sechsten Schalter (703) und dem zweiten Phasenwandler (102) verbunden ist und eine Ausgangsklemme der Stromausgleichsschaltung (805) elektrisch mit dem dritten Operationsverstärker (806) verbunden ist;
wobei die Stromausgleichsschaltung (805) zu Folgendem konfiguriert ist: Durchführen einer Mittelwertbildung über das erste Leistungssignal und das zweite Leistungssignal, die durch den ersten Phasenwandler (101) und den zweiten Phasenwandler (102) ausgegeben werden, um ein Durchschnittssignal zu erlangen, Eingeben eines gefilterten erstes Leistungssignal in eine positive Eingangsklemme des dritten Operationsverstärkers (806) und Eingeben des Durchschnittssignals in eine negative Eingangsklemme des dritten Operationsverstärkers (806); und
wobei der dritte Operationsverstärker (806) zu Folgendem konfiguriert ist: nach dem Bestimmen, dass das gefilterte erste Leistungssignal kleiner als das Durchschnittssignal ist, Reduzieren eines Werts eines Referenzsignals, das in eine zweite Klemme des dritten Komparators (803) eingegeben wird; oder nach dem Bestimmen, dass das erste Leistungssignal größer als das Durchschnittssignal ist, Erhöhen des Wert des Referenzsignals, das in die zweite Klemme des dritten Komparators (803) eingegeben wird.

8. COT-Parallelschaltung nach Anspruch 7, wobei das Filtermodul (104) eine erste Spule (1101), eine zweite Spule (1102) und einen dritten Kondensator (1103) umfasst;
wobei eine erste Klemme der ersten Spule (1101) elektrisch mit der dritten Klemme des sechsten Schalters (703) und der zweiten Klemme des siebten Schalters (704) verbunden ist und eine zweite Klemme der ersten Spule (1101) elektrisch mit einer zweiten Klemme der zweiten Spule (1102) und einer ersten Klemme des dritten Kondensators (1103) verbunden ist;
wobei eine erste Klemme der zweiten Spule (1102) elektrisch mit der dritten Klemme des achten Schalters (707) und der zweiten Klemme des neunten Schalters (708) verbunden ist und die zweite Klemme der zweiten Spule (1102) elektrisch mit der ersten Klemme des dritten Kondensators (1103) verbunden ist; eine zweite Klemme des dritten Kondensators (1103) geerdet ist; und
wobei die erste Spule (1101), die zweite Spule (1102) und der dritte Kondensator (1103) gemeinsam dazu konfiguriert sind, die Ausgangswelligkeit des ersten Leistungssignals und des zweiten Leistungssignals zu filtern.

9. Stromversorgungsvorrichtung, umfassend eine Steuerung und eine Parallelschaltung zum zeitkonstanten (COT-) Steuern, wobei die COT-Parallelschaltung die COT-Parallelschaltung nach einem der Ansprüche 1 bis 8 ist.

## Revendications

1. Circuit parallèle de commande à temps constant COT, comprenant un premier convertisseur de phase (101), un second convertisseur de phase (102), un dispositif de commande multiphase (103) et un module de filtre (104), dans lequel une borne de sortie du premier convertisseur de phase (101) est connectée électriquement à une borne d'entrée du dispositif de commande multiphase (103) et à une première borne d'entrée du module de filtre (104) ;
une borne d'entrée du second convertisseur de phase (102) est connectée électriquement à une borne de sortie du dispositif de commande multiphase (103), et une borne de sortie du second convertisseur de phase (102) est connectée électriquement à une seconde borne d'entrée du module de filtre (104) ; et
le dispositif de commande multiphase (103) est configuré pour commander, dans une période d'un signal RAMP reçu par le circuit COT parallèle et sur la base d'un premier signal de puissance émis par le premier convertisseur de phase (101), le second convertisseur de phase (102) pour émettre un deuxième signal de puissance,
**caractérisé en ce que**
le dispositif de commande multiphase (103) comprend un diviseur de fréquence (201), un premier inverseur de phase (202), un premier module de commande de période (203), un deuxième module de commande de période (204) et une première porte OR (205), dans lequel
une borne d'entrée du diviseur de fréquence (201) est connectée électriquement à la borne de sortie du premier convertisseur de phase (101), et une borne de sortie du diviseur de fréquence (201) est connectée électriquement à une borne d'entrée du premier module de commande de période (203) et à une borne d'entrée du premier inverseur de phase (202) par l'intermédiaire d'un premier point de connexion ;
une borne de sortie du premier inverseur de phase (202) est connectée électriquement à une borne d'entrée du deuxième module de commande de période (204) ;
une borne d'entrée de la première porte OR (205) est connectée électriquement à une borne de sortie du premier module de commande de période (203) et une autre borne d'entrée de la première porte OR (205) est connectée électriquement à une borne de sortie du deuxième module de commande de période (204) ;
le premier module de commande de période (203) et le deuxième module de commande de période (204) sont configurés pour : collecter une période de sortie du premier signal de puissance émis par le premier convertisseur de phase (101), et émettre un signal cible sur la base de la période de sortie ; et
la première porte OR (205) est configurée pour émettre un premier signal d'impulsion sur la base du signal cible émis par le premier module de commande de période (203) ou le deuxième module de commande de période (204), dans lequel le premier signal d'impulsion est utilisé pour indiquer le second convertisseur de phase pour émettre le deuxième signal de puissance, dans lequel le premier module de commande de période (203) comprend un second inverseur de phase (301), un module de source de courant constant (302), un premier module de commutation (303), un deuxième module de commutation (304), un module de condensateur (305), une première bascule (307) et un premier comparateur (306), dans lequel le module de source de courant constant (302) comprend une première source de courant constant (401), une deuxième source de courant constant (402) et une troisième source de courant constant (403), le premier module de commutation (303) comprend un premier commutateur (404) et un deuxième commutateur (405), le deuxième module de commutation (304) comprend un troisième commutateur (406), un quatrième commutateur (407) et un cinquième commutateur (408) et le module de condensateur (305) comprend un premier condensateur (409) et un deuxième condensateur (410) ;
une première borne du second inverseur de phase (301) est connectée électriquement à la borne de sortie du diviseur de fréquence (201), et une deuxième borne du second inverseur de phase (301) est connectée électriquement à une première borne du deuxième module de commutation (304) ;
une première borne du premier module de commutation (303) est connectée électriquement à la borne de sortie du diviseur de fréquence (201), une deuxième borne du premier module de commutation (303) est connectée électriquement à une première borne du module de source de courant constant (302), et une troisième borne du premier module de commutation (303) est connectée électriquement à une première borne du module de condensateur (305) ;
une deuxième borne du deuxième module de commutation (304) est connectée électriquement à une deuxième borne du module de source de courant constant (302), et une troisième borne du deuxième module de commutation (304) est mise à la terre ;
une troisième borne du module de condensateur (305) est mise à la terre ;
une borne d'entrée négative du premier comparateur (306) est connectée électriquement au premier module de commutation (303) et au premier condensateur (409) par l'intermédiaire d'un deuxième point de connexion, et une borne d'entrée positive du premier comparateur (306) est connectée électriquement au premier module de commutation (303) et au deuxième condensateur (410) par l'intermédiaire d'un troisième point de connexion ; une première borne d'entrée de la première bascule (307) est connectée électriquement au premier comparateur (306), une deuxième borne d'entrée de la première bascule (307) est connectée électriquement au diviseur de fréquence (201), et une borne de sortie de la première bascule (307) est connectée électriquement au deuxième module de commutation (304) ;
des premières bornes du premier commutateur (404) et du deuxième commutateur (405) sont connectées électriquement à la borne de sortie du diviseur de fréquence (201), une deuxième borne du premier commutateur (404) est connectée électriquement à une première borne de la première source de courant constant (401), une troisième borne du premier commutateur (404) est connectée électriquement à une première borne du premier condensateur (409), une deuxième borne du deuxième commutateur (405) est connectée électriquement à une première borne de la deuxième source de courant constant (402), et une troisième borne du deuxième commutateur (405) est connectée électriquement à une première borne du deuxième condensateur (410) ; une première borne du troisième commutateur (406) est connectée électriquement au second inverseur de phase (301), une deuxième borne du troisième commutateur (406) est connectée électriquement à la troisième source de courant constant (403), une troisième borne du troisième commutateur (406) est mise à la terre, une première borne du quatrième commutateur (407) est connectée électriquement à la première borne du premier condensateur (409) et à la troisième borne du premier commutateur (404) par l'intermédiaire d'un quatrième point de connexion, une deuxième borne du quatrième commutateur (407) est connectée électriquement à la borne de sortie de la première bascule (307), une troisième borne du quatrième commutateur (406) est mise à la terre, une première borne du cinquième commutateur (408) est connectée électriquement à la première borne du deuxième condensateur (410) et à la troisième borne du deuxième commutateur (405) par l'intermédiaire d'un cinquième point de connexion, une deuxième borne du cinquième commutateur (408) est connectée électriquement à la borne de sortie de la première bascule (307), et une troisième borne du cinquième commutateur (408) est mise à la terre ; et des secondes bornes de la première source de courant constant (401) et de la deuxième source de courant constant (402) sont connectées électriquement à une alimentation externe ;
le premier module de commutation (303) est configuré pour commander, sur la base de différents signaux émis par le diviseur de fréquence (201), un temps de charge du premier condensateur (409) et du deuxième condensateur (410) dans le module de condensateur (305) par le module de source de courant constant (302), dans lequel le temps de charge du premier condensateur (409) et du deuxième condensateur (410) dans le module de condensateur (305) par le module de source de courant constant (302) est le même que la période de sortie du premier signal de puissance ;
le deuxième module de commutation (304) est configuré pour commander, sur la base d'un signal émis par le second inverseur de phase (301), la décharge du premier condensateur (409) ; et
le premier comparateur (306) est configuré pour : lorsque le premier condensateur se décharge (409), émettre le signal cible lorsqu'il est déterminé qu'une valeur de tension du premier condensateur (409) est inférieure à une valeur de tension du deuxième condensateur (410) ;
la première bascule (307) est configurée pour commander, sur la base de signaux électriques émis par le premier comparateur (306) et le diviseur de fréquence (201), la fermeture de certains commutateurs du deuxième module de commutation (304) ; et le deuxième module de commutation (304) est en outre configuré pour commander, en fermant certains commutateurs et sur la base d'un signal émis par la première bascule (307), le premier condensateur (409) et le deuxième condensateur (410) pour vider les charges et dans lequel la topologie et le principe de fonctionnement du second module de commande de période sont identiques à ceux du premier module de commande de période.

2. Circuit COT parallèle selon la revendication 1, dans lequel le circuit COT parallèle comprend également un module de traitement de signal (106) ;
une borne d'entrée du module de traitement de signal (106) est connectée électriquement à une borne de sortie du module de filtre (104), et une borne de sortie du module de traitement de signal (106) est connectée électriquement à une borne d'entrée du premier convertisseur de phase (101) ; et
le module de traitement de signal (106) est configuré pour émettre un deuxième signal d'impulsion sur la base du signal RAMP reçu et d'un signal émis par le module de filtre (104), dans lequel le deuxième signal d'impulsion est utilisé pour indiquer au premier convertisseur de phase d'émettre le premier signal de puissance.

3. Circuit COT parallèle selon la revendication 2, dans lequel le module de traitement de signal (106) comprend un premier amplificateur opérationnel (601) et un deuxième comparateur (602) ;
un premier signal de référence est entré dans une première borne d'entrée du premier amplificateur opérationnel (601), une deuxième borne d'entrée du premier amplificateur opérationnel (601) est connectée électriquement à la borne de sortie du module de filtre (104), et une borne de sortie du premier amplificateur opérationnel (601) est connectée électriquement à une première borne d'entrée du deuxième comparateur (602) ;
le signal RAMP de compensation de rampe est entré dans une deuxième borne d'entrée du deuxième comparateur (602), et une borne de sortie du deuxième comparateur (602) est connectée électriquement à la borne d'entrée du premier convertisseur de phase (101) ;
le premier amplificateur opérationnel (601) est configuré pour ajuster, sur la base du premier signal de référence et du signal émis par le module de filtre (104), une valeur d'un signal émis au deuxième comparateur (602) ; et
le deuxième comparateur (602) est configuré pour émettre le premier signal d'impulsion lorsqu'il est déterminé qu'une valeur du signal RAMP est inférieure à la valeur du signal émis par le premier amplificateur opérationnel (601).

4. Circuit COT parallèle selon la revendication 3, dans lequel le premier convertisseur de phase (101) comprend un premier temporisateur (701), un premier circuit de commande (702), un sixième commutateur (703) et un septième commutateur (704) ; une première borne d'entrée du premier temporisateur (701) est connectée électriquement à la borne de sortie du module de traitement de signal (106), une deuxième borne d'entrée du premier temporisateur (701) est connectée électriquement à une deuxième borne d'entrée d'un second convertisseur de phase (102), et une borne de sortie du premier temporisateur (701) est connectée électriquement à une borne d'entrée du premier circuit de commande (702) ;
une première borne de sortie du premier circuit de commande (702) est connectée électriquement à une première borne du sixième commutateur (703), et une deuxième borne de sortie du premier circuit de commande (702) est connectée électriquement à une première borne du septième commutateur (704) ;
une deuxième borne du sixième commutateur (703) est connectée électriquement à l'alimentation externe, et une troisième borne du sixième commutateur (703) est connectée électriquement à la deuxième borne d'entrée du premier temporisateur (701), à une deuxième borne du septième commutateur (704), et à la première borne d'entrée du module de filtre (104) ;
la deuxième borne du septième commutateur (704) est connectée électriquement à la première borne d'entrée du module de filtre (104), et une troisième borne du septième commutateur (704) est mise à la terre ; et
le premier temporisateur (701) est configuré pour émettre un premier signal et un deuxième signal sur la base du deuxième signal d'impulsion émis par le module de traitement de signal (106) et d'un signal émis par le sixième commutateur (703), dans lequel le premier signal est utilisé pour indiquer au premier circuit de commande (702) de fermer le sixième commutateur (703) et d'ouvrir le septième commutateur (704), l'alimentation externe dans le premier convertisseur de phase émet le premier signal de puissance par l'intermédiaire du sixième commutateur (703) dans un état fermé, le deuxième signal est utilisé pour indiquer au premier circuit de commande (702) de fermer le septième commutateur (704) et d'ouvrir le sixième commutateur (703), et le premier convertisseur de phase (101) arrête d'émettre le premier signal de puissance.

5. Circuit COT parallèle selon la revendication 4, dans lequel le second convertisseur de phase (102) comprend un second temporisateur (705), un second circuit de commande (706), un huitième commutateur (707) et un neuvième commutateur (708) ; une première borne d'entrée du second temporisateur (705) est connectée électriquement à la borne de sortie du dispositif de commande multiphase (103), une deuxième borne d'entrée du second temporisateur (705) est connectée électriquement à une deuxième borne d'entrée du premier convertisseur de phase (101), et une borne de sortie du second temporisateur (705) est connectée électriquement à une borne d'entrée du second circuit de commande (706) ;
une première borne de sortie du second circuit de commande (706) est connectée électriquement à une première borne du huitième commutateur (707), et une deuxième borne de sortie du second circuit de commande (706) est connectée électriquement à une première borne du neuvième commutateur (708) ;
une deuxième borne du huitième commutateur (707) est connectée électriquement à l'alimentation externe, une troisième borne du huitième commutateur (707) est connectée électriquement à la deuxième borne d'entrée du second temporisateur (705), à une deuxième borne du neuvième commutateur (708), et à la deuxième borne d'entrée du module de filtre (104) ;
la deuxième borne du neuvième commutateur (708) est connectée électriquement à la deuxième borne d'entrée du module de filtre (104), et une troisième borne du neuvième commutateur (708) est mise à la terre ; et
dans lequel le circuit COT parallèle comprend également un second circuit de synchronisation de retard de conduction qui est configuré pour émettre un troisième signal et un quatrième signal sur la base du premier signal d'impulsion émis par le dispositif de commande multiphase (103) et d'un signal émis par le huitième commutateur (707), dans lequel le troisième signal est utilisé pour indiquer au second circuit de commande (706) de fermer le huitième commutateur (707) et d'ouvrir le neuvième commutateur (708), l'alimentation externe dans le second convertisseur de phase (102) émet le deuxième signal de puissance par l'intermédiaire du huitième commutateur (707) dans un état fermé, le quatrième signal est utilisé pour indiquer au second circuit de commande (706) de fermer le neuvième commutateur (708) et d'ouvrir le huitième commutateur (707), et le second convertisseur de phase (102) arrête d'émettre le deuxième signal d'alimentation.

6. Circuit COT parallèle selon la revendication 5, dans lequel le premier temporisateur (701) comprend un troisième module de commutation (801), un quatrième condensateur (802), un troisième comparateur (803) et une troisième bascule (804) ; une première borne du troisième module de commutation (801) est connectée électriquement au premier circuit de commande (702), une deuxième borne du troisième module de commutation (801) est connectée électriquement à l'alimentation externe, une troisième borne du troisième module de commutation (801) est connectée électriquement à une première borne du quatrième condensateur (802), et une quatrième borne du troisième module de commutation (801) est mise à la terre ;
une deuxième borne du quatrième condensateur (802) est connectée électriquement à une borne d'entrée positive du troisième comparateur (803), et une troisième borne du quatrième condensateur (802) est mise à la terre ;
une borne de sortie du troisième comparateur (803) est connectée électriquement à une première borne d'entrée de la troisième bascule (804) ;
une deuxième borne d'entrée de la troisième bascule (804) est connectée électriquement au module de traitement de signal (106), et une borne de sortie de la troisième bascule (804) est connectée électriquement au premier circuit de commande (702) ;
le troisième module de commutation (801) est configuré pour commander, sur la base d'un signal émis par le premier circuit de commande (702), l'alimentation externe pour charger le quatrième condensateur (802) ;
le troisième comparateur (803) est configuré pour émettre un cinquième signal lorsqu'il est déterminé qu'une valeur d'un signal de référence reçu par une deuxième borne d'entrée du troisième comparateur (803) est inférieure à une valeur de tension du quatrième condensateur (802) ; et
la troisième bascule (804) est configurée pour : émettre le premier signal sur la base d'un signal d'impulsion émis par le module de traitement de signal (106), et émettre le deuxième signal sur la base du cinquième signal.

7. Circuit COT parallèle selon la revendication 6, dans lequel le premier temporisateur (701) comprend également un circuit d'égalisation de courant (805) et un troisième amplificateur opérationnel (806), le circuit d'égalisation de courant (805) comprend une pluralité de filtres RC, et il existe un noeud commun entre certains filtres RC ;
une première borne du circuit d'égalisation de courant (805) est connectée électriquement au sixième commutateur (703) et au second convertisseur de phase (102), et une borne de sortie du circuit d'égalisation de courant (805) est connectée électriquement au troisième amplificateur opérationnel (806) ;
le circuit d'égalisation de courant (805) est configuré pour : réaliser er une moyenne sur le premier signal de puissance et le deuxième signal de puissance qui sont émis par le premier convertisseur de phase (101) et le second convertisseur de phase (102) pour obtenir un signal moyen, entrer un premier signal de puissance filtré vers une borne d'entrée positive du troisième amplificateur opérationnel (806) et entrer le signal moyen vers une borne d'entrée négative du troisième amplificateur opérationnel (806) ; et
le troisième amplificateur opérationnel (806) est configuré pour : après avoir déterminé que le premier signal de puissance filtré est inférieur au signal moyen, réduire une valeur d'un signal de référence entré dans une deuxième borne du troisième comparateur (803) ; ou après avoir déterminé que le premier signal de puissance est supérieur au signal moyen, augmenter la valeur du signal de référence entré dans la deuxième borne du troisième comparateur (803).

8. Circuit COT parallèle selon la revendication 7, dans lequel le module de filtre (104) comprend un premier inducteur (1101), un second inducteur (1102) et un troisième condensateur (1103) ;
une première borne du premier inducteur (1101) est connectée électriquement à la troisième borne du sixième commutateur (703) et à la deuxième borne du septième commutateur (704), et une deuxième borne du premier inducteur (1101) est connectée électriquement à une deuxième borne du second inducteur (1102) et à une première borne du troisième condensateur (1103) ;
une première borne du second inducteur (1102) est connectée électriquement à la troisième borne du huitième commutateur (707) et à la deuxième borne du neuvième commutateur (708), et une deuxième borne du second inducteur (1102) est connectée électriquement à la première borne du troisième condensateur (1103) ;
une deuxième borne du troisième condensateur (1103) est mise à la terre ; et
le premier inducteur (1101), le second inducteur (1102) et le troisième condensateur (1103) sont configurés conjointement pour filtrer les ondulations de sortie du premier signal de puissance et du deuxième signal de puissance.

9. Dispositif d'alimentation électrique, comprenant un dispositif de commande et un circuit parallèle de commande à temps constant COT, dans lequel le circuit COT parallèle est le circuit COT parallèle selon l'une quelconque des revendications 1 à 8.
